(19) Europäisches Patentamt
European Patent Office
Office européen des brevets

(11) EP 4 082 075 B1

(12) EUROPEAN PATENT SPECIFICATION

(45) Date of publication and mention of the grant of the patent:
**06.05.2026 Bulletin 2026/19**

(21) Application number: **19957093.8**

(22) Date of filing: **27.12.2019**

(51) International Patent Classification (IPC):
***H01Q 3/26*** (2006.01) ***H01Q 1/32*** (2006.01)
***H04W 4/40*** (2018.01) ***H01Q 15/00*** (2006.01)
***H01Q 3/44*** (2006.01) ***H01Q 1/52*** (2006.01)
***H01Q 3/24*** (2006.01) ***H01Q 19/06*** (2006.01)
***H01Q 13/08*** (2006.01) ***H01Q 21/20*** (2006.01)

(52) Cooperative Patent Classification (CPC):
**H01Q 1/3275; H01Q 1/525; H01Q 3/242; H01Q 3/2647; H01Q 3/44; H01Q 13/085; H01Q 15/0086; H01Q 19/06; H01Q 21/205; H04W 4/40**

(86) International application number:
**PCT/US2019/068676**

(87) International publication number:
**WO 2021/133408 (01.07.2021 Gazette 2021/26)**

# (54) EMBEDDED ANTENNAS STRUCTURES FOR WIRELESS COMMUNICATIONS AND RADAR

EINGEBETTETE ANTENNENSTRUKTUREN FÜR DRAHTLOSE KOMMUNIKATION UND RADAR

STRUCTURES D'ANTENNES INTÉGRÉES POUR COMMUNICATIONS SANS FIL ET RADAR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.11.2022 Bulletin 2022/44**

(73) Proprietor: **Intel Corporation**
**Santa Clara, CA 95054 (US)**

(72) Inventors:
- **CHOUDHURY, Debabani**
**Thousand Oaks, CA 91320 (US)**
- **CAMACHO PEREZ, Jose Rodrigo**
**Guadalajara, JAL 44160 (MX)**
- **YAMADA, Shuhei**
**Hillsboro, OR 97124 (US)**
- **SKINNER, Harry**
**Beaverton, OR 97006 (US)**
- **BURGER, Vida Ilderem**
**Phoenix, AZ 85048 (US)**
- **HORINE, Bryce**
**Portland, OR 97229 (US)**

(74) Representative: **Viering, Jentschura & Partner mbB**
**Patent- und Rechtsanwälte**
**Am Brauhaus 8**
**01099 Dresden (DE)**

(56) References cited:
**JP-A- 2009 266 733** **US-A1- 2011 199 273**
**US-A1- 2012 274 525** **US-A1- 2012 327 516**
**US-A1- 2017 012 359** **US-A1- 2019 089 419**
**US-B2- 10 270 508**

- **KALAAGI MOHAMMED ET AL: "Design of Dual Polarized Retrodirective Metasurfaces", 2018 IEEE RADIO AND ANTENNA DAYS OF THE INDIAN OCEAN (RADIO), RADIO SOCIETY, 15 October 2018 (2018-10-15), pages 1 - 2, XP033472494, DOI: 10.23919/RADIO.2018.8572395**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 082 075 B1

## Description

### Technical Field

Various embodiments relate generally to wireless communications and wireless technologies.

### Background

Vehicle embedded radar and communication systems are required to have precise antenna beam control to enable beam searching and tracking processes for optimal performance. In general, a narrower antenna beamwidth reduces spatial ambiguity, results in better resolution and accurate sensing capability in radar sensing applications. Also in wireless communication technology, the higher directivity helps to achieve improved link budget and the narrow beamwidth helps to make the communication secure. However it becomes more challenging to implement the beam search and tracking processes with intensely narrowed antenna beamwidth. In current wireless systems, sector level sweep (SLS) with beam broadening/refinement technique is used to overcome such a problem. However this process often involves complex signal processing andrequires scanning time to identify optimal scan angle. Also the system needs to have fine resolution phase shifter to support such precise beam controlling.

Further, academic and industrial researchers including wireless OEMs and service providers are proposing to enable V2X scenarios that needs vehicular embedded antenna system architecture definition. Driving factors for connected vehicles need to address requirements from automotive companies, including the aerodynamics; aesthetics;, coverage with no blind-spots; reliable performance in a challenging and dynamic environment; and so on. Enablement of low-cost, high-volume manufacturing (HVM) of mmW antenna system modules, meeting many stringent requirements from auto- companies is a MUST for the success of antenna system embodiment in connected vehicles of future.

In addition, the advent of 5G to the auto industry implies the increasing demand for communication systems and antennas on the vehicle. This implies the need to integrate an increasing number of antennas to provide 360deg coverage for most bands (e.g. 0.9-7GHz, 28GHz, 39GHz, etc.) without impacting the aesthetics or aerodynamics of the vehicles in the future. This challenge gets further complicated considering the need to integrate these wireless radio systems within a wide variety of vehicles sharing the roads: from cars, to trucks and others models like convertibles, three-wheelers/auto-rickshaws, motorcycles and even bicycles.

Cars, SUVs, and other vehicles, especially autonomous vehicles, need to be always connected with a reliable and fast wireless connectivity with ultra-high bandwidth. A vehicular communication system, such as V2X, relies on wireless connectivity to provide secure, interference-free, and ubiquitous connectivity to ensure reliable communication between vehicles and infrastructure to enhance traffic safety.

US 2012/327516 A1 discloses a beamforming apparatus including a number of beam ports NB arranged in a circular array, the circular array having a radius a, an annular shaped lens encircling the number of beam ports NB, the annular shaped lens having an inner radius a, an outer radius b, and an inhomogeneous refractive index n(r) that may be a negative refractive index, and a number of array ports NA coupled to the outer rim of the annular shaped lens.

"Kalaagi Mohammed et al: "Design of Dual Polarized Retrodirective Metasurfaces", 2018 IEEE Radio and Antenna Days of the Indian Ocean (RADIO), 2018-10-15, Radio Society, Pages: 1-2, 2018-10-15, DOI: 10.23919/RADIO.2018.8572395 discloses the design of retrodirective metasurfaces following the generalized phase law of reflection for dual polarizations TM and TE at a given incident angle at 14.7GHz. Two different unit cells (patch and cross) structures have been proposed in the design approach having two and three degrees of freedom respectively. To highlight on the applicative potential of metasurfaces for radar cross section enhancement at oblique incident angles, the monostatic RCS for a cross structured metasurface has been calculated showing a high level of retrodirectivity at the desired angle for TM and TE polarizations.

US 10270508 B2 discloses methods and systems for communication between a network base station and a remote device. The methods include providing, at a base station coupled to the network, a modulated signal to mixers in a retro-directive metamaterial antenna, and receiving an RF transmission beam from the remote device, at the retro-directive metamaterial antenna, and radiating from the antenna a modulated retro-directed beam, using mixer products, directed toward the remote device.

### Brief Description of the Drawings

According to the present invention, a a retro-directive antenna array system is provided as set forth in claim 1. Preferred embodiments are set forth in dependent claims. In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:

FIG. 1 shows an exemplary vehicular to everything (V2X) connectivity network scenario according to at least on exemplary embodiment of the present disclosure.

FIG. 2 shows an exemplary Retro-Directive Array (RDA) system according to at least one exemplary embodiment of the present disclosure.

FIG. 3 shows an exemplary illustration of negative refraction.

FIG. 4 shows an antenna array according to at least one exemplary embodiment of the present disclosure.

FIG. 5 shows exemplary diagrams including a diagram model of an NIM material and radiation results according to at least one exemplary embodiment of the present disclosure.

FIGS. 6-7 show exemplary schematic diagrams of an RDA system with an Negatiive Refractive Index Engineered Materials (NIM) according to at least one exemplary embodiment of the present disclosure.

FIG. 8 shows an exemplary flowchart for manufacturing retro-directive antenna array system including an antenna array with NIM according to at least one exemplary embodiment of the present disclosure.

FIG. 9 shows exemplary vehicle-to-everything (V2X) communication scenarios according to at least one exemplary embodiment of the present disclosure.

FIG. 10 shows an exemplary schematic diagram of a cross-section of a portion of a combination antenna array structure and an exemplary illustration of the azimuth coverage provided by the combination antenna array structure according to at least one exemplary embodiment of the present disclosure.

FIG. 11 shows exemplary diagrams illustrating the elevation coverage provided by an exemplary combination antenna structure according to at least one exemplary embodiment.

FIG. 12 shows an exemplary combination antenna array structure and an exemplary quadrant of a switch beam antenna array portion of the combination antenna array structure according to at least one exemplary embodiment of the present disclosure.

FIG. 13 shows an exemplary schematic diagram of a cross-section of a combination antenna array structure according to at least one exemplary embodiment.

FIG. 14 shows an exemplary quadrant of an exemplary switched beam antenna array and a corresponding schematic diagram and a graph showing coverages according to at least one exemplary embodiment of the present disclosure.

FIG. 15 exemplary illustrations of an exemplary switched beam antenna array elements according to at least one exemplary embodiment.

FIG. 16 shows a cross-section view of an exemplary housing with signal enhancing and environmental protective elements according to at least one exemplary embodiment.

FIG. 17 shows an exemplary illustration of an (ATSA) antenna element surrounded by a performance enhancing housing according and graphs according to at least one exemplary embodiment.

FIG. 18 shows an exemplary perspective view of a quadrant of an exemplary switched beam antenna array structure enclosed in a housing according and an exemplary top view 1810 of an exemplary entire switched beam antenna array structure according to at least one exemplary embodiment of the present disclosure.

FIG. 19 shows graphs showing radiation patterns according to at least one exemplary embodiment.

FIG. 20 shows an illustration of the on-roof combination antenna structure system topology on a vehicle and a top view of an exemplary combination antenna structure according to at least one exemplary embodiment.

FIG. 21 shows an exemplary flowchart for a method of manufacturing a combination antenna array structure according to at least one exemplary embodiment.

Fig. 22 shows an exemplary radio according to at least one exemplary embodiment of the present disclosure.

Figs. 23A-C show exemplary radio circuitry according to at least one exemplary embodiment of the present disclosure.

Fig. 24 shows an exemplary light source enclosure according to at least one exemplary embodiment of the present disclosure.

Fig. 25 shows an exemplary wireless communication system according to at least one exemplary embodiment of the present disclosure.

Fig. 26 shows an exemplary light assembly according to at least one exemplary embodiment of the present disclosure.

Fig. 27A and Fig. 27C shows exemplary light assemblies according to at least one exemplary embodiment of the present disclosure.

Fig. 27B and Fig. 27D show exemplary radiation plots respectively of the light assemblies of Fig. 27A and Fig. 27C.

Fig. 28 shows exemplary light assemblies according to at least one exemplary embodiment of the present disclosure.

Figs. 29A-I show exemplary aspects of a light assembly according to at least one exemplary embodiment of the present disclosure.

Fig. 30 shows an exemplary light assembly structure according to at least one exemplary embodiment of the present disclosure.

Figs. 31A-E show exemplary aspects of a light assembly according to at least one exemplary embodiment of the present disclosure.

FIG. 32 illustrates an example of a top view of an integrated embedded antenna system according to various aspects of the present disclosure.

FIG. 33 illustrates an example of a side view of the integrated embedded antenna system of FIG. 32.

FIG. 34 is a schematic diagram illustrating a portion of the integrated antenna system of FIG. 33.

FIG. 35 is a schematic drawing illustrating an example of a universal antenna system control bus according to various aspects of the present disclosure.

FIG. 36 is another schematic drawing illustrating an example of an integrated embedded antenna according to various aspects of the present disclosure.

FIG. 37 is another schematic drawing illustrating an embedded antenna system including a mmW antenna system and a sub-10 GHz antenna system according to various aspects of the present disclosure.

It should be noted that like reference numbers may be used to depict the same or similar elements, features, and structures throughout some of the drawings.

## Description

The following detailed description refers to the accompanying exemplary drawings that show, by way of illustration, specific details and embodiments in which the invention may be practiced.

The word "exemplary" is used herein to mean "serving as an example, instance, or illustration." Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one. The terms "proper subset", "reduced subset", and "lesser subset" refer to a subset of a set that is not equal to the set, i.e. a subset of a set that contains less elements than the set.

Any vector and/or matrix notation utilized herein is exemplary in nature and is employed solely for purposes of explanation. Accordingly, aspects of this disclosure accompanied by vector and/or matrix notation are not limited to being implemented solely using vectors and/or matrices, and that the associated processes and computations may be equivalently performed with respect to sets, sequences, groups, etc., of data, observations, information, signals, samples, symbols, elements, etc.

As used herein, "memory" are understood as a non-transitory computer-readable medium in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

The term "terminal device" utilized herein refers to user-side devices (both portable and fixed) that can connect to a core network and/or external data networks via a radio access network. "Terminal device" can include any mobile or immobile wireless communication device, including User Equipment (UEs), Mobile Stations (MSs), Stations (STAs), cellular phones, tablets, laptops, personal computers, wearables, multimedia playback and other handheld or body-mounted electronic devices, consumer/home/office/commercial appliances, vehicles, and any other electronic device capable of user-side wireless communications. Without loss of generality, in some cases terminal devices can also include application-layer components, such as application processors or other general processing components that are directed to functionality other than wireless communications. Terminal devices can optionally support wired communications in addition to wireless communications. Furthermore, terminal devices can include vehicular communication devices that function as terminal devices.

The term "network access node" as utilized herein refers to a network-side device that provides a radio access network with which terminal devices can connect and exchange information with a core network and/or external data networks through the network access node. "Network access nodes" can include any type of base station or access point, including macro base stations, micro base stations, NodeBs, evolved NodeBs (eNBs), Home base stations, Remote Radio Heads (RRHs), relay points, Wi-Fi/WLAN Access Points (APs), Bluetooth master devices, DSRC RSUs, terminal devices acting as network access nodes, and any other electronic device capable of network-side wireless communications, including both immobile and mobile devices (e.g., vehicular network access nodes, moving cells, and other movable network access nodes). As used herein, a "cell" in the context of telecommunications may be understood as a sector served by a network access node. Accordingly, a cell may be a set of geographically colocated antennas that correspond to a particular sectorization of a network access node. A network access node can thus serve one or more cells (or sectors), where the cells are characterized by distinct communication channels. Furthermore, the term "cell" may be utilized to refer to any of a macrocell, microcell, femtocell, picocell, etc.

Certain communication devices can act as both terminal devices and network access nodes, such as a terminal device that provides network connectivity for other terminal devices.

Various aspects of this disclosure may utilize or be related to radio communication technologies. While some examples may refer to specific radio communication technologies, e.g. Wi-Fi, the examples provided herein may be similarly applied to various other radio communication technologies, both existing and not yet formulated, particularly in cases where such radio communication technologies share similar features as disclosed regarding the following examples. Various exemplary radio communication technologies that the aspects described herein may utilize include, but are not limited to: a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology, for example Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDMA2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP Rel. 9 (3rd Generation Partnership Project Release 9), 3GPP Rel. 10 (3rd Generation Partnership Project Release 10) , 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access (LAA), MuLTEfire, UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDMA2000 (3G)), Evolution-Data Optimized or Evolution-Data Only (EV-DO), Advanced Mobile Phone System (1st Generation) (AMPS (1G)), Total Access Communication arrangement/Extended Total Access Communication arrangement (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Offentlig Landmobil Telefoni, Public Land Mobile Telephony), MTD (Swedish abbreviation for Mobiltelefonisystem D, or Mobile telephony system D), Public Automated Land Mobile (Autotel/PALM), ARP (Finnish for Autoradiopuhelin, "car radio phone"), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handyphone System (PHS), Wideband Integrated Digital Enhanced Network (WiDEN), iBurst, Unlicensed Mobile Access (UMA), also referred to as also referred to as 3GPP Generic Access Network, or GAN standard), Zigbee, Bluetooth®, Wireless Gigabit Alliance (WiGig) standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle (V2V) and Vehicle-to-X (V2X) and Vehicle-to-Infrastructure (V2I) and Infrastructure-to-Vehicle (I2V) communication technologies, 3GPP cellular V2X, DSRC (Dedicated Short Range Communications) communication arrangements such as Intelligent-Transport-Systems, and other existing, developing, or future radio communication technologies. As used herein, a first radio communication technology may be different from a second radio communication technology if the first and second radio communication technologies are based on different communication standards.

Aspects described herein may use such radio communication technologies according to various spectrum management schemes, including, but not limited to, dedicated licensed spectrum, unlicensed spectrum, (licensed) shared spectrum (such as LSA, "Licensed Shared Access," in higher frequencies, e.g. above 6 GHz, and SAS, "Spectrum Access System," in higher frequencies, and may be used in various spectrum bands including, but not limited to, IMT (International Mobile Telecommunications) spectrum (including 450 - 470 MHz, 790 - 960 MHz, 1710 - 2025 MHz, 2110 - 2200 MHz, 2300 - 2400 MHz, 2500 - 2690 MHz, 698-790 MHz, 610 - 790 MHz, 3400 - 3600 MHz, etc., where some bands may be limited to specific region(s) and/or countries), IMT-advanced spectrum, IMT-2020 spectrum (expected to include 3600-3800 MHz, 3.5 GHz bands, 700 MHz bands, bands within the 24.25-86 GHz range, etc.),

spectrum made available under FCC's "Spectrum Frontier" 5G initiative (including 27.5 - 28.35 GHz, 29.1 - 29.25 GHz, 31 - 31.3 GHz, 37 - 38.6 GHz, 38.6 - 40 GHz, 42 - 42.5 GHz, 57 - 64 GHz, 64 - 71 GHz, 71 - 76 GHz, 81 - 86 GHz and 92 - 94 GHz, etc.), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 70.2 GHz - 71 GHz band, any band between 65.88 GHz and 71 GHz, bands currently allocated to automotive radar applications such as 76-81 GHz, and future bands including 94-300 GHz and above. Besides cellular applications, specific applications for vertical markets may be addressed such as PMSE (Program Making and Special Events), medical, health, surgery, automotive, low-latency, drones, etc. applications. Furthermore, aspects described herein may also use radio communication technologies with a hierarchical application, such as by introducing a hierarchical prioritization of usage for different types of users (e.g., low/medium/high priority, etc.), based on a prioritized access to the spectrum e.g., with highest priority to tier-1 users, followed by tier-2, then tier-3, etc. users, etc. Aspects described herein can also use radio communication technologies with different Single Carrier or OFDM flavors (CP-OFDM, SC-FDMA, SC-OFDM, filter bank-based multicarrier (FBMC), OFDMA, etc.) and in particular 3GPP NR (New Radio), which can include allocating the OFDM carrier data bit vectors to the corresponding symbol resources.

For purposes of this disclosure, radio communication technologies may be classified as one of a Short Range radio communication technology or Cellular Wide Area radio communication technology. Short Range radio communication technologies may include Bluetooth, WLAN (e.g., according to any IEEE 802.11 standard), and other similar radio communication technologies. Cellular Wide Area radio communication technologies may include Global System for Mobile Communications (GSM), Code Division Multiple Access 2000 (CDMA2000), Universal Mobile Telecommunications System (UMTS), Long Term Evolution (LTE), General Packet Radio Service (GPRS), Evolution-Data Optimized (EV-DO), Enhanced Data Rates for GSM Evolution (EDGE), High Speed Packet Access (HSPA; including High Speed Downlink Packet Access (HSDPA), High Speed Uplink Packet Access (HSUPA), HSDPA Plus (HSDPA+), and HSUPA Plus (HSUPA+)), Worldwide Interoperability for Microwave Access (WiMax) (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

The terms "radio communication network" and "wireless network" as utilized herein encompasses both an access section of a network (e.g., a radio access network (RAN) section) and a core section of a network (e.g., a core network section).

Unless explicitly specified, the term "transmit" encompasses both direct (point-to-point) and indirect transmission (via one or more intermediary points). Similarly, the term "receive" encompasses both direct and indirect reception. Furthermore, the terms "transmit", "receive", "communicate", and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e. unidirectional or bidirectional communication in one or both of the incoming and outgoing directions. The term "calculate" encompass both 'direct' calculations via a mathematical expression/formula/relationship and 'indirect' calculations via lookup or hash tables and other array indexing or searching operations.

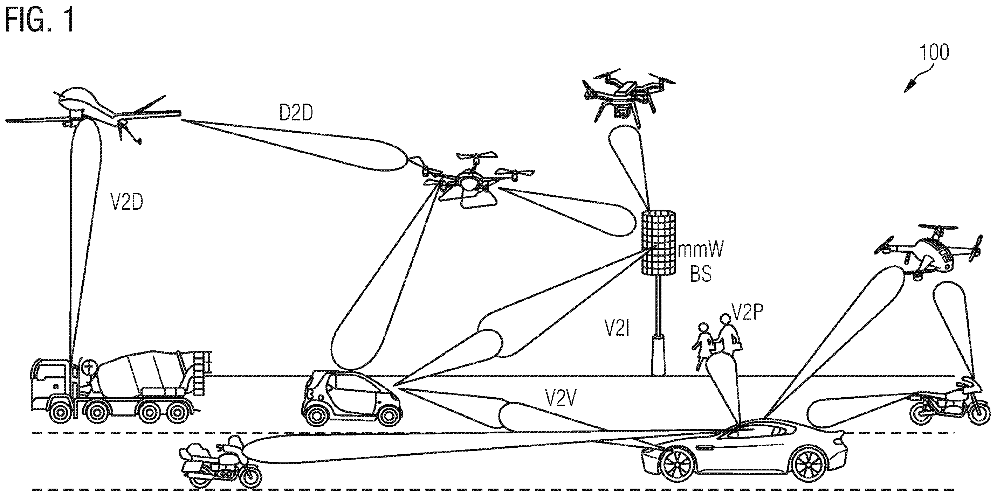

FIG. 1 shows an exemplary connectivity network scenario 100 for Vehicle-to-Everything (V2X) according to some aspects and illustrates the complex requirements and elements needed to implement efficient multi-dimensional vehicular communications. Network scenario 100 illustrates several exemplary different communication interactions, including Vehicle-to-Drone (V2D), Drone-to-Drone (D2D), Vehicle-to-Infrastructure (V2I), Vehicle-to-Vehicle (V2V), and Vehicle-to-Pedestrian (V2P).

As shown network scenario 100, embedded radar and communications systems are required to have precise antenna beam control to enable beam searching and tracking processes for optimal performance. In general, a narrower beam reduces spatial ambiguity, thereby resulting in better resolution and accurate sensing capability in radar sensing applications. Furthermore, for wireless communications, the higher directivity provides for improved link budget and the narrower beam widths help to ensure more secure communications. However, the more narrow the beams, the more challenging it is to implement the beam search and tracking processes.

Current wireless systems implement a sector level sweep (SLS) with beam broadening and refinement techniques to overcome this problem. However, this process often involves complex signal processing and requires a scanning time to identify optimal scan angles. Also, these techniques require a fine resolution phase shifter to support the precise beam controlling which they are intended to achieve.

In order to provide the highly directional and narrow beams needed for V2X communications, a retrodirective array (RDA) system may be used to automatically steer the beam towards the direction of an incoming received signal. The RDA system works by receiving a signal, at a reception antenna, phase conjugating it, and mixing it with a baseband signal and transmitting the signal back in the same direction it came from.

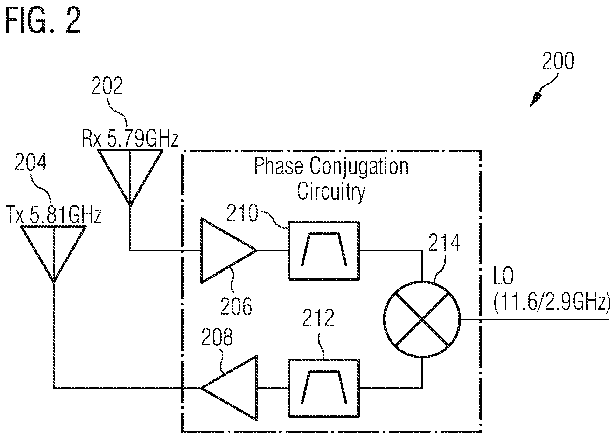

FIG. 2 shows an exemplary RDA system 200 according to some aspects. It is appreciated that RDA system 200 may be simplified for purposes of this explanation.

RDA system 200 may include an antenna array including multiple antenna elements 202-204 in addition to radio frequency (RF) transceiver signal processing components 206-214. In RDA system 200, an antenna array with two antennas, one reception (Rx) antenna 202 and one transmission antenna 204, is shown, but it is appreciated that other antenna configurations, including those with a shared antenna (for both transmission and reception), may also be included. RDA system 200 may include one or more amplifiers 206-208, e.g. an input amplifier 206 (such as a low noise amplifier LNA) and an output amplifier 208 (such as a power amplifier PA). RDA system 200 may include phase conjugation circuitry including one or more band-pass filters 210-212 for the reception (Rx) directions and the transmission (Tx) direction, respectively, and also include a mixer 214 for mixing outgoing baseband signals from a local oscillator (LO) with information obtained from the signals received by the RDA system 200.

The RDA system may determine which direction to transmit an outgoing signal (i.e. output signal) based on information obtained from a received signal (i.e. input signal). For example, another communication device may transmit a first signal, e.g. a pilot signal, to a wireless communication device with RDA system 200. The RDA system 200 receives the first signal at its antenna array, e.g. at Rx antenna 202. The received signal (fRF) in each path contains phase information depending on the angle of arrival (AoA) at RDA system 200 and this information is mixed with a baseband signal provided via a local oscillator (LO) by the mixer 214. The down converted signal (fLO - fRF) results in having a conjugated phase with the received signal. In other words, if the phase of the received first signal (e.g., received pilot signal) is + 30 degrees, the output signal of the phase conjugation circuitry of RDA system 200 is -30 degrees. By implementing this technique, it is possible to steer a beam without phase shifters.

However, in order to achieve the conjugated phase signal with down-conversion, RDA system 200 requires either double the frequency of the received signal fRF (11.6 GHz) or harmonic mixers with half the fRF frequency for the LO signal (2.9 GHz). In general, a higher LO frequency is unfavorable since it suffers higher propagation losses and introduces higher phase and/or amplitude noises and imbalances in the signal distribution network. And, on the other hand, the performance of harmonic mixers depend on the driving signal level, and to avoid any losses at the mixer, it requires relatively high input LO signal power. Thus, in general, solutions with harmonic mixers require higher levels of power amplification, thereby increasing overall system power consumptions, and also increase the amplitudes and/or phase noises and imbalances in LO signal distribution.

According to some aspects, devices and methods are disclosed which realize phase conjugation of incoming signals by using a negative refractive-index engineered material (NIM) (also known as negative-index metamaterials) applied on one or more antenna elements of an antenna array. An NIM is a material with properties including negative values for both permittivity, $\varepsilon$, and magnetic permeability, $\mu$. NIM materials are constructed of periodic base parts called unit cells, which are typically significantly smaller than the wavelength of the radiation or signals which they are being used for. In general, the unit cells are stacked or planar and configured in a particular repeated pattern to make up the NIM. The specifications for the response of each unit cell are predetermined prior to construction and are based on the intended response of the NIM. For example, according to aspects of this disclosure, the NIM may be selected and/or constructed so that the permittivity $\varepsilon$ and permeability $\mu$ are equal to (or at least substantially equal to) -1.

Each of the cells may be composed of wires and/or split ring resonators. These wires and/or split ring resonators may be composed of metals, e.g. copper, disposed in a strict geometric order. The size of these elements and distances between the elements are smaller than the frequency wavelengths in which the RDA antenna system may operate.

In some aspects, the NIM may be composed of photonic crystals. Photonic crystals are metamaterials composed or dielectric or metallic components (which may be referred to as "atoms") arranged in a two-dimensional or three-dimensional lattice. For example, the NIM may be composed of a dielectric material, e.g. a Silicon-based slab patterned with cylindrical holes at the nanoscale level arranged on a square lattice.

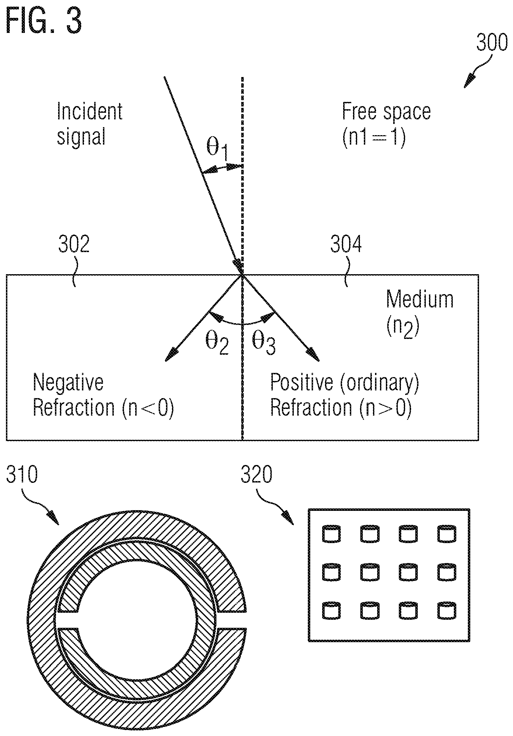

In some aspects, the NIM may be composed of composite metamaterials. Composite metamaterials are composed of artificially designed arrays of LC oscillators mounted on electronic circuit plates. Different combinations of conductive elements may be arranged on a substrate to produce the composite metamaterials, or configurations with transmission lines may be used. For example, split-ring resonators (SRRs) combined with straight wires may be fabricated using printed copper circuits, wherein the SRRs may include dimensions (e.g. diameter) in the millimeter range or in the nanometer range. Splits in the rings provide resonance at a wavelength larger than the ring diameter and a smaller ring inside of a larger ring provides a larger capacitance. It is appreciated that other shapes may be used, e.g. square style SRRs. An exemplary SRR is shown in 310 of FIG. 3.

In some aspects, the NIM may include composite metamaterials with nanostructured arrays which may include, for example, arrays of nanosized metallic elements (e.g., noble metal columns) arranged on a dielectric layer above a metallic layer (e.g. a noble metal layer) above a substrate. The unit cell size may be in the range of 300-900 nanometers. An example of this is shown in 320 of FIG. 3, wherein the distances between the pillars may be in the range of 300-900 nm.

FIG. 3 shows an exemplary illustration 300 of negative refraction according to some aspects. It is appreciated that illustration 300 may be simplified for purposes of this explanation.

According to some aspects, signals hitting and traveling through NIM result in an inverted angle of arrival (AoA). By carefully designing and applying the material property of the NIM, this inverted AoA can be used to achieve a phase conjugated signal so that it can be used in a RDA system without the need for further circuitry or the aforementioned frequency requirements (e.g., a LO with double the received signal frequency). The AoA of an incident signal may be defined as θ1 as shown in FIG. 3, while an NIM 302 may provide a negative refraction of the incident signal with an angle defined by θ2. The right side of FIG. 3 shows an ordinary medium with a positive refractive index (n>0) which provides an angle of refraction of θ3.

NIMs may be designed to have simultaneously negative values for permittivity and permeability and, therefore, exhibit the property of negative refraction as shown on the left portion of illustration 300. The devices and techniques according to aspects of this disclosure utilize the negative refraction properties of NIMs in order to realize phase conjugation for RDA systems so that the system does not require harmonic mixers and/or high frequency LO signal distribution, thereby simplifying the RDA system by reducing the number of signal processing components that are needed. Accordingly, the devices and techniques proposed herein are able to achieve phase conjugation without the need for frequency and/or harmonic mixers needed in current RDA systems. Therefore, the devices and techniques of this disclosure provide for solutions to phase conjugation in RAD systems without the requirement of LO signal distribution as well as the amplitude and/or phase noise imbalances introduced by frequency and harmonic mixers. In addition, in comparison with other conventional methods such as Van Atta arrays, the devices provided herein do not require long transmission lines for signal distribution networks, e.g. Van Atta Arrays require long transmission lines to connect antenna elements which must be uniformly spaced to produce a phase gradient in order to reradiate energy back in the AoA. Van Atta arrays also make it difficult to realize 2-dimensional beam steering capability due to the requirement that all signal feedlines must have a same length.

The refractive index of a material may be expressed as $n = \pm\sqrt{\varepsilon_r \mu_r}$ , where $\varepsilon_r$ is the permittivity and $\mu_r$ is the permeability. In general, the positive sign is used, i.e., $n = +\sqrt{\varepsilon_r \mu_r}$. When both $\varepsilon_r$ and $\mu_r$ are negative, the negative sign is used, i.e. $n = -\sqrt{\varepsilon_r \mu_r}$ . With respect to the positive and negative refractions, the angle of refraction (θ2 for a negative refraction and θ3 for a positive refraction) for an incident signal with an AoA of θ1 on a material is shown in FIG. 3.

In order to achieve phase conjugation (i.e., the inverted phase) of the incident signal using negative refraction, the material property of the NIM may be expressed as:

$$-\frac{sin\theta_2}{sin\theta_1} = \frac{n_1}{n_2}$$

where $n_1$ and $n_2$ are the refraction index of free space and the medium, respectively, and $\theta_1$ and $\theta_2$ are the angle of incident signal and refraction, respectively. In order to achieve phase conjugation, $\theta_2$ needs to be $-\theta_1$, therefore, the refraction index of the NIM applied to an antenna according to some aspects of this disclosure can be expressed as:

$$-\frac{sin\theta_1}{sin\theta_1} = \frac{1}{n_2}$$

$$\therefore\ n_2 = -1\sqrt{\varepsilon_r \mu_r} = -1$$

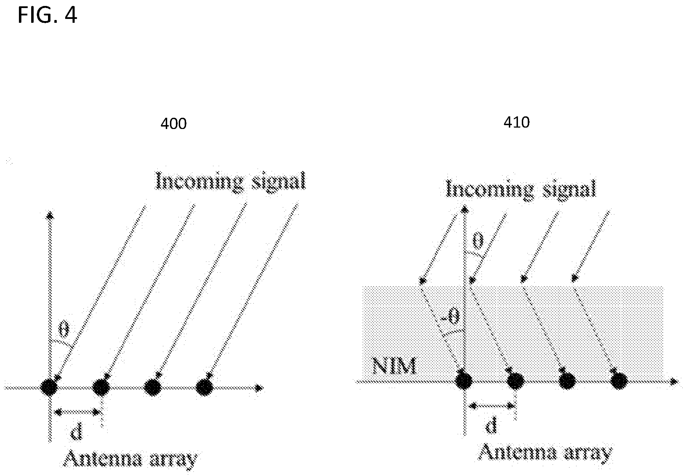

Accordingly, for an NIM having both a permittivity and a permeability of -1, a signal may pass through the NIM with a conjugated phase as shown in FIG. 4. It is appreciated that FIG. 4 may be simplified for purposes of this explanation.

The left side of FIG. 4 provides an illustration 400 of an antenna array with antenna elements (shown as black circles) spaced "d" distance apart configured to receive an incoming signal. The left-most antenna element in antenna array may receive the incoming signal at an angle of θ. It is appreciated that for purposes of this explanation, the AoA of the incident signal is shown as being similar for all antenna elements, but the phase of incoming signal may be different for each antenna element, as the most left side signal received by the most left side antenna element traveled a longer distance than the most right side of the signal and antenna.

The right side of FIG. 4 provides an illustration 410 of an antenna array with an NIM (shaded area) over the antenna elements (shown as black circles) spaced "d" distance apart according to some aspects. The incoming signal first hits the NIM at an angle of θ, and due to the negative refractive properties of the NIM, is refracted towards the antenna array at an angle of - θ, i.e., the incoming signal is already phase conjugated upon its reception at the antenna array. Thus, an RDA system with an NIM over the antenna array as illustrated in 410 may be able to implement RDA techniques without the use of frequency and/or harmonic mixers or long transmission lines since the incoming signal is already phase conjugated upon its receipt at the antenna array.

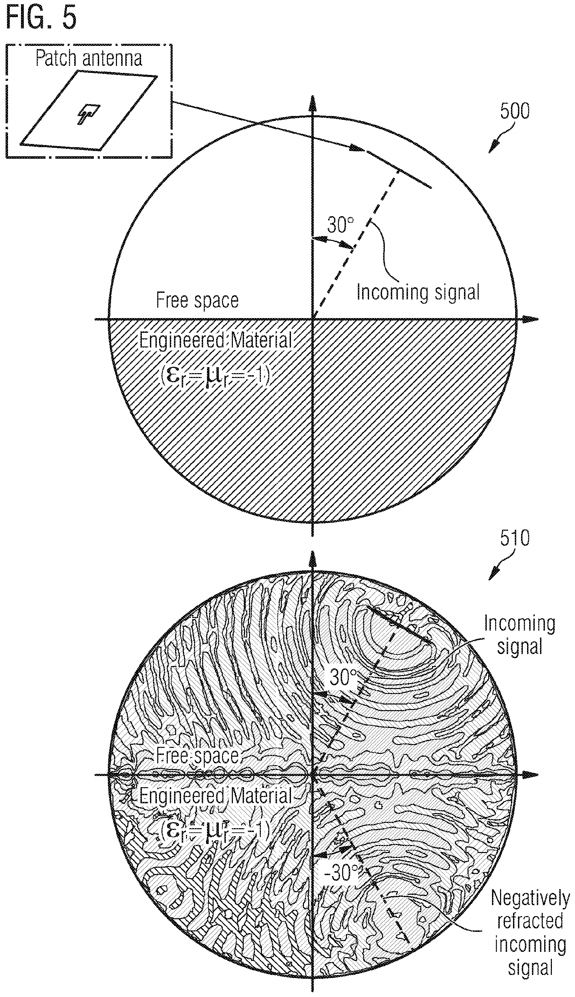

FIG. 5 shows exemplary diagrams including a diagram model 500 of an NIM material and radiation results 510 provided by the diagram model 500 according to some aspects. It is appreciated that FIG. 5 may be simplified for purposes of this explanation.

In diagram model 500, a conventional patch antenna is used as the device to transmit a signal, e.g., a pilot signal, towards the NIM, or, as labeled in FIG. 5, "Engineered Material." For purposes of this disclosure, it is appreciated that NIM and Engineer Material may be used interchangeable. The patch antenna is arranged to transmit signals with an AoA of 30° at the Engineered Material and free space boundary. As shown in FIG. 5, the Engineered Material has a permittivity $\varepsilon$ and a permeability $\mu$ which are both equal (or substantially close) to -1.

The radiation result diagram 510 on the bottom shows the negative refraction and inverted angle of arrival (AoA) of the signal as it passes through NIM at an inverted angle of - 30°, i.e. the angle of the signal as it passes through the NIM is phase conjugated with the signal transmitted from the patch antenna before it hits the NIM.

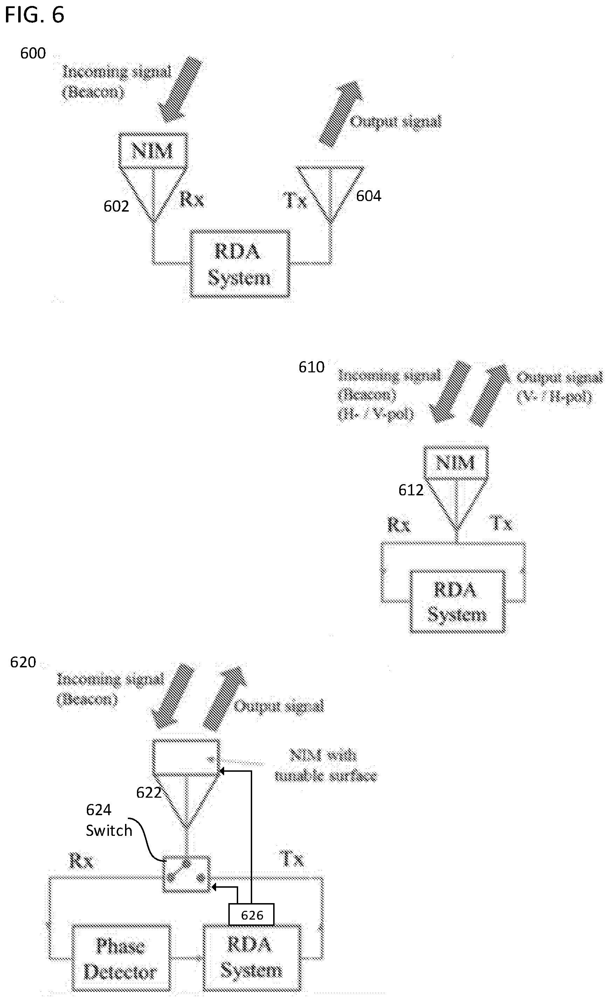

FIG. 6 shows exemplary schematic diagrams 600-620 of an RDA system with an NIM according to some aspects. It is appreciated that the schematic diagrams may be simplified for purposes of this explanation.

The NIM may include any type of engineered material structures implemented in front or on top of the receiving antenna so that the signals received by the reception antenna (Rx) of a wireless device with an RDA system pass through the NIM prior to being received at the antenna array. In this manner, the NIM provides a phase conjugated signal to the antenna array so that the RDA system does not need to perform any additional steps of phase conjugation. Accordingly, an RDA system that does not require frequency and/or harmonic mixers, double the frequency of the received signal for a LO frequency, or half the frequency of the received signal for the LO frequency for phase conjugation may be realized.

In 600, a separated transmission-reception (Tx/Rx) configuration is shown. In this example, the Rx antenna array 602 and the Tx antenna array 604 are separate and the NIM is applied only to the Rx antenna array 602. In this manner, the incoming signal (e.g., a beacon signal transmitted from another device) is received at the Rx antenna array 602 with the phase already conjugated due to the NIM, and the RDA system mixes this phase conjugated signal with a LO baseband signal to produce the output signal to be transmitted from the Tx antenna 604 in the direction in which the incoming signal was received. In this manner, a wireless device is able to produce highly directed and narrow beams at another communication device (e.g., in a vehicle, drone, mobile phone, infrastructure element, etc.) without the need to perform the additional signal processing steps of phase conjugation after having received the antenna at the antenna array.

In 610, a transceiver configuration is shown with a shared antenna array 612 where the antenna array utilizes the same antenna elements for both reception and transmission. In this example, the received and transmitted signal are separated using a dual-polarized antenna and used in conjunction with the NIM to take advantage of the NIM's orientation dependent property. Using two different polarizations for Tx and Rx signals and aligning the NIM in a specific manner, only the polarization of the receiver may be impacted by the NIM while the polarization of the transmitter will maintain its normal refraction index property. This may be achieved by changing the alignment of the NIM with respect to the desired antenna polarization. In some aspects, this NIM can be same as in 600 or it can be different. Thus, application of the NIM to a shared antenna array may also be utilized.

In 620, a configuration with a tunable NIM surface is illustrated. To dynamically change the material properties of NIM, in 610, the polarization of the signal propagating through the NIM is changed. On the other hand, in 620, the NIM itself is altered by implementing the tunability. In this architecture, in combination with a shared antenna 622 and a switch 624 to switch between transmission (Tx) and reception (Rx) paths, the material property of the NIM may be altered by a tunable capability that is applied to the surface of the NIM. For example, the refractive index of the NIM may be altered via the application of a stimulus which is applied in combination with the switching between the Tx and Rx paths. For example, the NIM may exhibit a negative refractive index only when the stimulus is applied. So, when the device is switched to receive mode, as shown by the configuration of the switch 624, for example, the stimulus is applied so that incoming signals are phase conjugated by the NIM. And, when the device is in transmit mode, the stimulus is removed so that the phase of the output signal (i.e. transmitted signal) is unaffected by the negative refraction property of the NIM. The coordination of the application of the stimulus and the controlling of the switch may be performed by a controller 626 of the RDA system.

For each of 600-620, a key concept is that an incoming signal, such as a beacon or a pilot signal, received at a wireless communication device with the RDA system is phase conjugated by passing through the NIM, and therefore, the RDA system does not require frequency and/or harmonic mixers to phase conjugate the incoming signal with an outgoing baseband signal in order to transmit the signal to be transmitted by the wireless communication device in the direction of the received incoming signal.

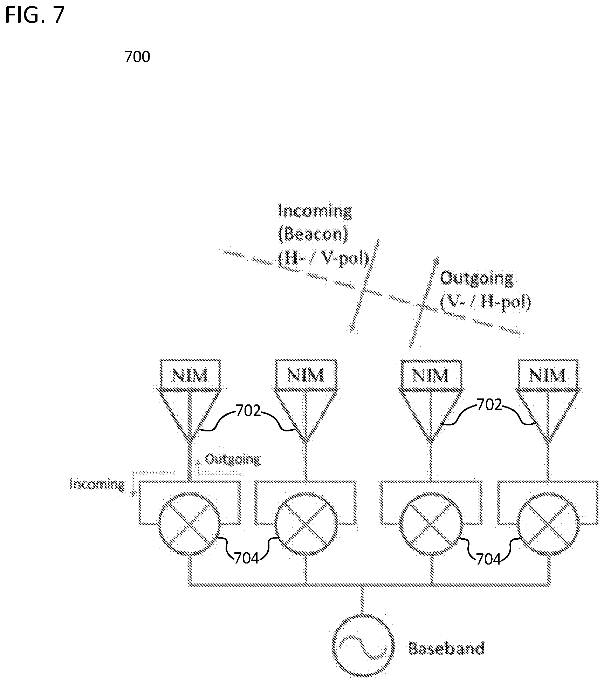

FIG. 7 shows an additional exemplary schematic diagram 700 of an RDA system with an NIM according to some aspects. It is appreciated that the schematic diagram may be simplified for purposes of this explanation.

In diagram 700, the incoming beacon signal and the transmitted signals from a shared antenna, including a plurality of antenna elements 702, are separated by their polarization (V- and H- pol). The phase of the incoming beacon signal is reversed by the NIM structure on the antenna elements 702. The baseband signal is upconverted by each of the mixers 704 with the received beacon signal so that the transmitted (i.e. outgoing) signal carries the baseband signal with the reversed phase information of the received beacon signal to steer the beam toward the direction of the incoming signal. In this sense, the RDA system of this disclosure avoids the need for frequency and harmonic mixers to achieve phase conjugation with the received beacon signal.

According to some aspects, the NIM structures may be applied to the antenna array using a multilayer package technology. The material properties on top of the antenna elements may be engineered with patterned NIM structures.

According to some aspects, the RDA system with a NIM as disclosed herein provides numerous advantages over currently existing phase conjugations structures including RDA systems including phase conjugation circuitry (e.g., frequency and/or harmonic mixers) and Van Atta array architectures. In the RDA systems with phase conjugation circuitry, the phase of the incoming beacon signal is reversed by mixing with the local oscillator (LO) signal which has two times the frequency of the incoming signal. This requirement of needing 2 times the frequency of the incoming signal at the LO introduces substantial phase noise to the system, especially at higher frequency band applications such as 5G and other new radio (NR) radio access technologies. Additionally, there are higher levels of complexity required to achieve equi-phase at these higher frequency levels. The RDA systems with a NIM according to aspects of this disclosure eliminate the need to mix at two times the frequency of the incoming signal, thereby reducing the complexity and the phase noise of the system.

In the Van Atta array structure, the phase of the incoming signals are reversed by the judicious placement of the antenna array elements. For example, in the Van Atta array, the left-most antenna element of the reception antenna array is connected to the right-most antenna element of the transmission antenna array. Although the Van Atta array does not require two times the received frequency for the LO, due to the requirement for longer transmission lines, the Van Atta array structures are prone to higher loss in the signal distribution network. Additionally, in Van Atta arrays, it is difficult to design an equi-phase, long transmission line based distribution network.

According to some aspects, each individual NIM structure applied to each of the antenna array elements are identical and the signal distribution network is carefully designed to achieve equi-phase transmission lines so that the phase of each of the signals can be matched at each of the antenna elements. This may be accomplished by designing electrically length matched lines. This may involve EM circuit simulation to make sure the phase of each lines are matched. In comparison with the phase conjugation circuitry based RDA systems, since the RDA system with NIM according to this disclosure does not require two times the frequency of the received signal as the LO signal, it facilitates the designing of the equi-phase distribution network.

According to some aspects, the RDA system with the NIM structures applies to the antenna array as described in this disclosure provide increased directional ability for beam transmission, less signal processing, and lower latency times for reacting to an incoming signal and transmitting a signal in response to the incoming signal.

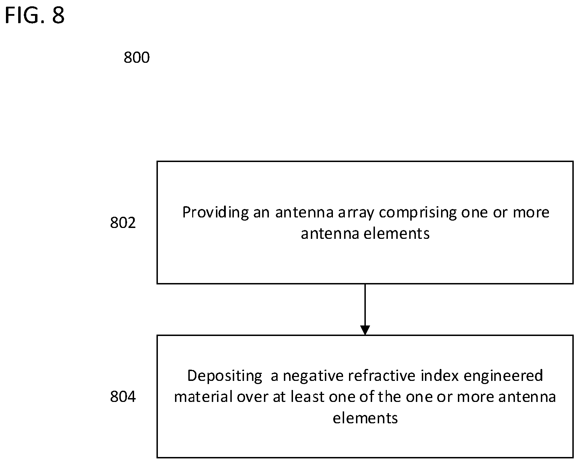

FIG. 8 shows an exemplary flowchart 800 for manufacturing retro-directive antenna array system including an antenna array with NIM according to some aspects. It is appreciated that flowchart 800 may be simplified for purposes of this explanation.

The method may include providing an antenna array comprising one or more antenna elements 802; and depositing a negative refractive-index engineered material (NIM) over at least one of the one or more antenna elements 804. Accordingly, the NIM may provide the RDA system with the phase conjugation of the received signal so that the RDA signal processing circuitry to facilitate signal processing. For example, since the signal is already phase conjugated, the RDA system does not require further frequency and/or harmonic mixers to achieve phase conjugation to mix with the baseband signal to produce the signal to be transmitted from the RDA system.

The explosion in the vehicle communication, e.g., V2X, market along with the introduction of millimeter-wave (mmW) based technologies, such as 5G, will help usher in an age of autonomous driving predicated on the delivery of high bandwidth and low latency connectivity. Accordingly, it will be important to provide for antennas capable of meeting many stringent requirements, such as high data capacity, low latency times, and high coverage, while being able to be integrated into a vehicle body without providing a negative impact to other vehicular considerations, e.g., aerodynamics, aesthetics, etc.

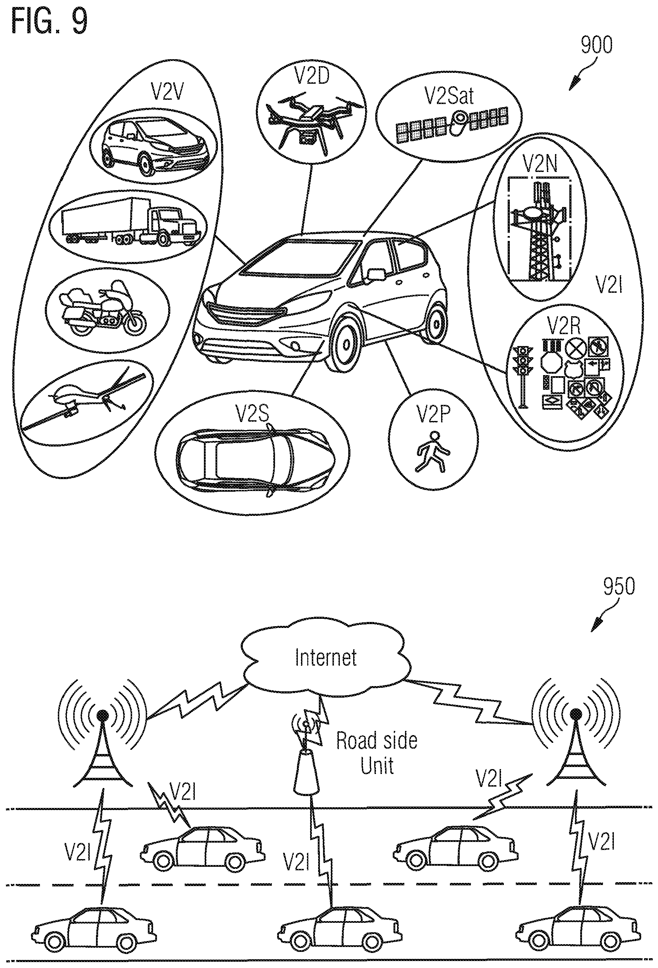

FIG. 9 shows two exemplary vehicle communication scenarios 900 and 950 according to some aspects. These Vehicle-to-Everything (V2X) scenarios, including Vehicle-to-Vehicle (V2V), Vehicle-to-Drone (V2D), Vehicle-to-Satellite (V2SAT), Vehicle-to-Network (V2N), Vehicle-to-Infrastructure (V2I), Vehicle-to-Road signs (V2R), Vehicle-to-Pedestrian (V2P), and Vehicle-to-Sensor (V2S), may require vehicular embedded antenna architectures in order to satisfy the high bandwidth and low latency requirements for safe and effective wireless communications while also meeting other demands such as aerodynamics, aesthetics, coverage with no-blind spots, reliable performance in a challenging and dynamic environment, etc. The ability to implement low-cost and high-volume manufacturing of mmW antenna system modules in vehicles meeting all these requirements may be critical for achieving the success of V2X communications in the coming years.

Current solutions include antenna structures which protrude from the vehicle body (e.g. based on a shark fin design) or phased array modules at the roof edge or corners of the vehicle to achieve the desired coverage. However, such approaches are prone to blind spots in radio frequency (RF) coverage. Furthermore, these approaches may affect the aerodynamics of the vehicle, its aesthetics, or require multiple mmW integrated circuits (ICs) with multiple heat sinks and longer, inefficient mmW and/or radio frequency (RF) transmission or coaxial lines introducing higher manufacturing costs and degraded performance. The coaxial and RF transmission lines may also be subject to increased attenuations from the required transitions to and from the circuits and antennas, which will further degrade the performance in addition to providing higher equipment costs.

According to some aspects, a low-profile, vehicle body conformable, hybrid, mmW antenna array for vehicular communications meeting all of the stringent requirements for radio frequency communication while providing a vehicle friendly implementation with respect to aerodynamics and conformability to different vehicle bodies is described. The antenna structures provided herein provide suitable aerodynamics, high mmW coverage with minimal or no blind spots, thermal stability, and robust performance in a dynamically changing environment. This disclosure provides for a compact, low-profile antenna array structure providing 360-degree azimuth coverage around a vehicle as well as 180-degree hemispherical elevation coverage over the vehicle when embedded in the vehicle roof. The antenna array includes a conformable beam-switched array in combination with phased array topologies. The entire antenna array distribution network structure uses a low-profile, low-loss design which is conformable and easily implemented in a vehicle body with minimal or no protrusions and without the need for any distribution networks based on long transmission lines. The printed circuit board (PCB), switched antenna array elements have an impedance matched lower loss transmission structure that enable full azimuth coverage around the antenna structure as well as V2X-friendly elevation patterns which may be tiltable by using the vehicle material and structural profiles.

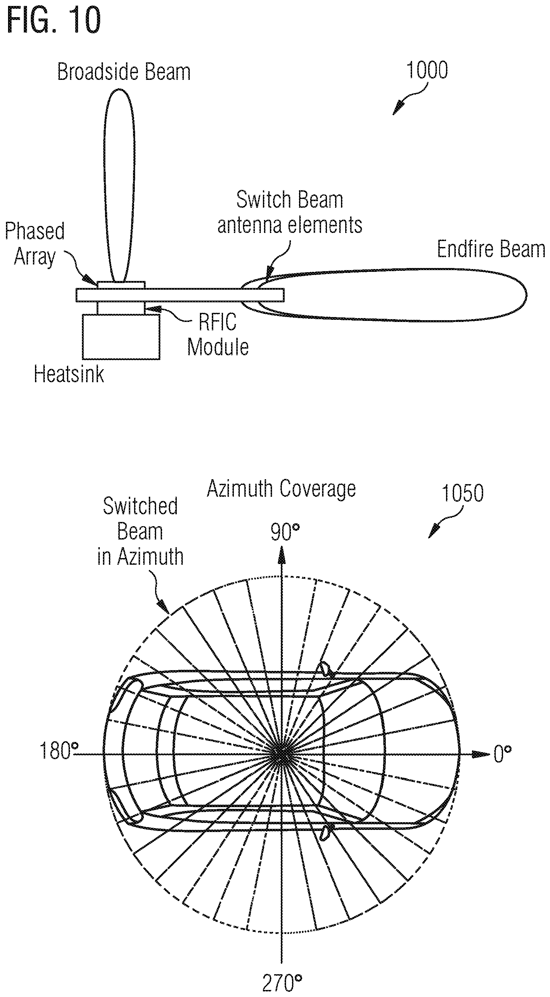

FIG. 10 shows an exemplary schematic diagram of a cross-section of a portion of a combination antenna array structure 1000 and an exemplary illustration of the azimuth coverage 1050 provided by the combination antenna array structure according to some aspects.

In some aspects, the antenna structure, including the phase array and the circular switched beam array elements, provided herein may also be integrated into other parts of a vehicle other than the roof, e.g., a bumper or a side or corner of a vehicle, to achieve desired coverages as necessary due to different vehicle forms and scenarios.

The combination antenna structure 1000 with phased array and switched array beam elements is a low-vertical profile antenna system that incorporates a novel switched beam antenna element with a circular (or substantially circular, e.g. elliptical) contour which may emit endfire-type beams around a phased antenna array which may emit broadside-type beams. Both of these antenna arrays may be operatively coupled to a radio frequency integrated circuit (RFIC) module, which may provide further connections to other processing circuitry in the vehicle. Also, a heat sink may be included to provide a heat outlet for the RFIC module and/or combination antenna array. The circular switched beam array elements may be operatively coupled to the RFIC module via switches, which will be explained in further detail in the ensuing description.

According to some aspects, the switched beam antenna array elements may be enclosed in a dual-purpose housing structure that both enhances performance and provides protection from the environment. Furthermore, the proximity of a vehicular metallic body may be used to enhance the beam pattern shape and gain performance.

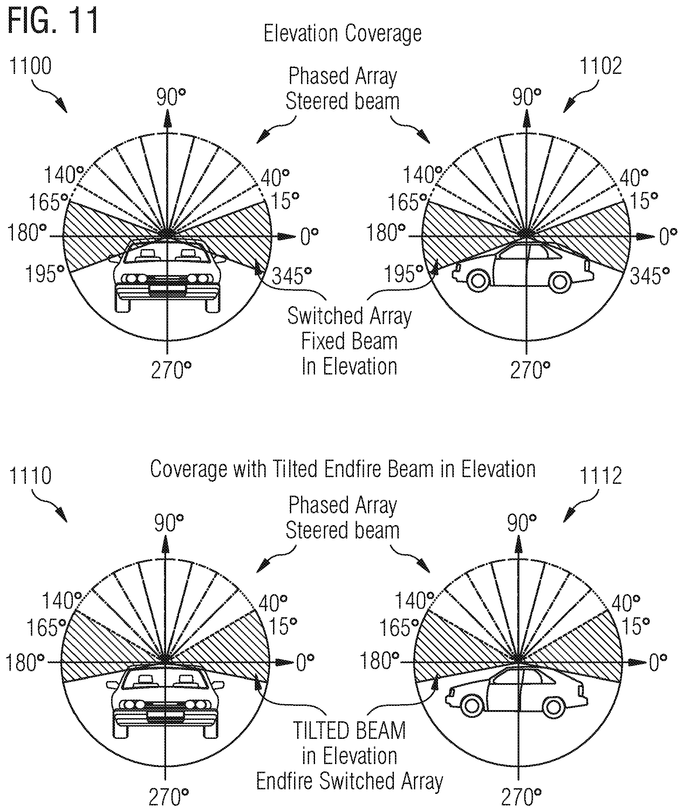

The combination antenna array structure 1000 with both phased array elements and switched beam array elements provides for a vertically low-profile, thereby making it suitable for vehicular roof and/or body integration. The phase array (e.g., providing a broadside beam as depicted in 1000) may provide hemispherical coverage above the vehicle and the switched beam antenna array (e.g., providing endfire beams as depicted in 1000) may ensure 360 degree azimuthal coverage 1050 without blind spots. Disposition of the switched beam antenna array elements in a circular, semi-circular, or elliptical arrangement provides for the complete 360 degree coverage (or a sector of the coverage, e.g. 90 degrees, if desired). The steerable M x N phased array (i.e., with a configuration of M elements by N elements, where M and N are both integers), in combination with the switched beam antenna structure, provides 180 degree hemispherical coverage, which can be above the vehicle if the antenna structure is integrated into the roof as illustrated in FIG. 11. The combination antenna array package shown as part of 1000 may be provided on a printed circuit board (PCB) assembly that can be integrated conformably within a plastic, metal, or composite vehicle roof in order to minimize the aerodynamic effects of the antenna structure without noticeable loss in performance.

FIG. 11 shows exemplary diagrams illustrating the elevation coverage provided by the combination antenna structure according to some aspects. The top illustrations show a vehicular front side view 1100 and a vehicular side view 1102 of radio frequency coverage provided by the combination antenna structure according to aspects of this disclosure. The bottom illustrations show a vehicular front side view 1110 and a vehicular side view 1112 of radio frequency coverage provided by the combination antenna structure with a tiltable endfire beam according to aspects of this disclosure.

In 1100 and 1102, the phased array may provide coverage via beam steering above the vehicle, e.g., in a hemispherical range from 0 to 180 degrees above the vehicle. The broad side beams from the phase array may have a stronger signal gains as it approaches the zenith of the hemispherical coverage, e.g., a point at the 90 degree mark, i.e., a point that lies orthogonal to the face of the phase array. The phased array may provide good coverage on its own without the assistance of the switched beam array in a certain range, e.g. between the 15 degrees and 165 degrees. However, near the boundaries of the hemispherical coverage, the radio frequency coverage (i.e. the signal gains) of the phased array may be supplemented by the switched beam array.

The switched beam array may provide the 360 degree azimuthal coverage around the vehicle at a beam width (measured in the vertical direction, i.e. the altitude direction) of about 30 degrees, e.g., in the shaded portions from 165 degrees to 195 degrees and 15 degrees to 345 degrees. The phased array may provide the strongest radio frequency coverage as a beam perpendicular to the phased array, i.e., in the general direction of the 90 degrees shown in FIG. 11. However, the phased array may be able to steer beams towards the direction of the coverage of the switched beam array elements so that they may complement each other. Furthermore, as illustrated in the bottom illustrations 1110 and 1112, the switched beam antenna arrays may be able to tilt their coverage towards the phased array coverage to provide better coverage in the areas between 15 degrees and 40 degrees, for example. The metals and plastic body materials of the vehicle may be used to tilt the switched beam array elements coverage in elevation to adjust the pattern to have higher-peak gains in certain desired directions.

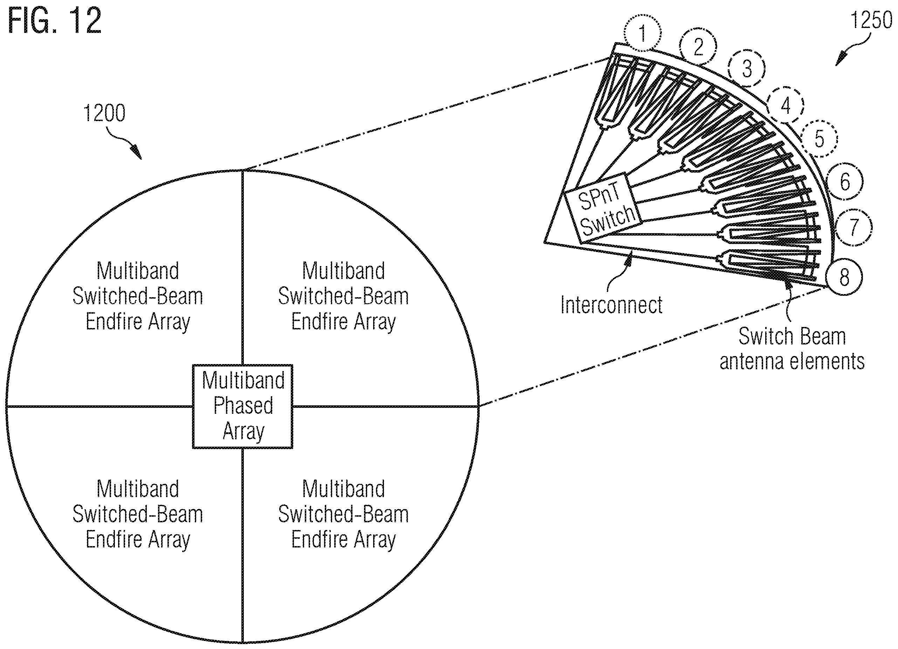

FIG. 12 shows an exemplary combination antenna array structure 1200 with four multiband switched beam antenna array quadrants (i.e., multiband switched-beam endfire arrays) and an exemplary quadrant 1250 of the switch beam antenna array portion of the combination antenna array structure according to some aspects.

Both phase array and the switched beam antenna array may be designed with multifrequency features, i.e. they may both be capable of transmitting and receiving signals over multiple frequency bands. The multiband phase array may include an array of M x N elements (where M and N are both integers, e.g. 4 x 4 elements) and the switch beam endfire antenna array are shown in greater detail in 1250. Each quadrant may include a number of switch beam array element, e.g. eight are shown in 1250, which are connected with interconnects to a single-pole-N-throw (SPNT) switch, which in this example, since there are eight endfire antenna elements, may be an SP8T switch. The combination of the phase array with the switched beam antenna array surrounding it may have a substantially low vertical profile for integration into a vehicular body. While SPNT switches are shown, it is appreciated that other similar switches may be used.

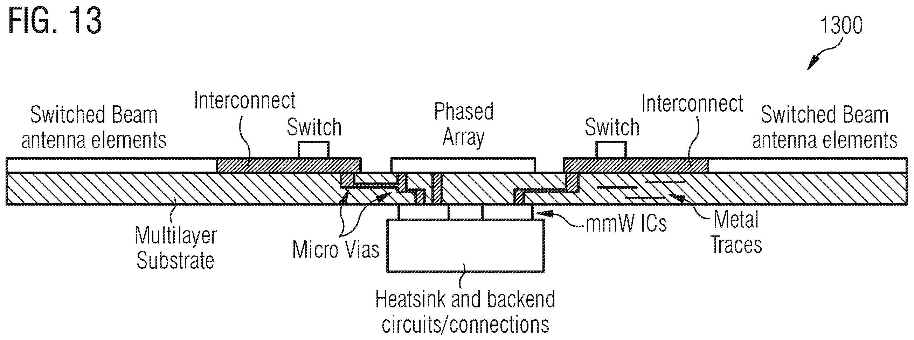

FIG. 13 shows an exemplary schematic diagram of a cross-section of a combination antenna array structure 1300 according to some aspects.

As shown, combination antenna array structure 1300 may include a number of different features, including the phased array (including an array of M x N antenna elements) which is surrounded by a switched beam antenna array including a plurality of switched beam antenna elements. The switched beam antenna elements may be arranged on a multilayer substrate. The switched beam antenna elements may be connected to a switch via interconnects, and the switch may be operatively connected to the mmW ICs. The phased array may also be connected to the mmW ICs through microvias in the multilayer substrate. Furthermore, metal traces may be included in the multilayer substrate in order to enhance the radiation pattern of the combination antenna array structure. The mmW ICs may be arrange on a heat sink and the overall structure may include further backend circuits and connections to connect the combination antenna structure to further circuitry located within a vehicle.

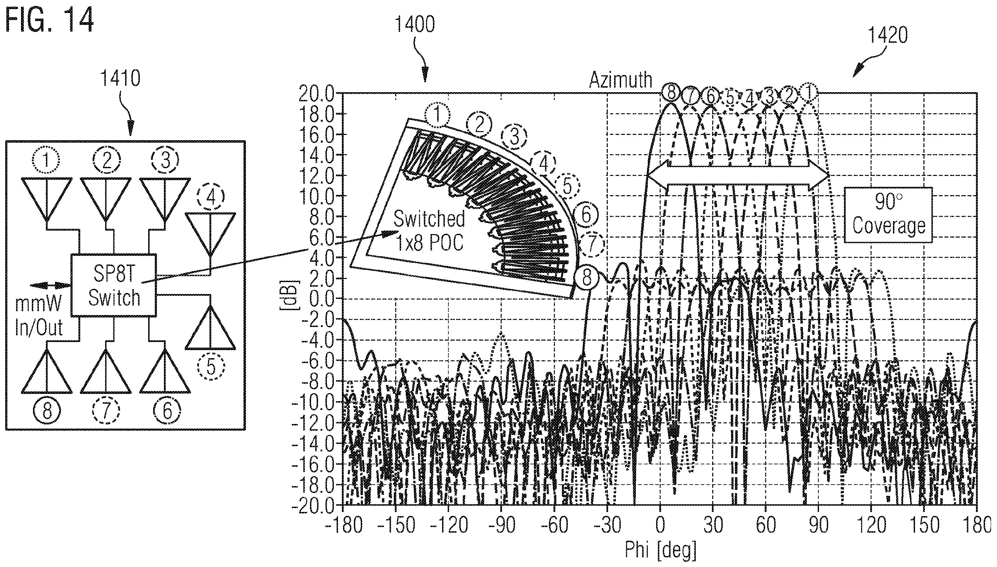

FIG. 14 shows an exemplary quadrant of a switched beam antenna array 1400 and a corresponding schematic diagram 1410 along with a graph 1420 showing coverages with the signal gain plotted on the y-axis and the degrees plotted on the x-axis. The quadrant of the switched beam array may include eight antipodal tapered slot antenna array elements with a single-pole-eight-throw (SP8T) switch covering 90 degrees in the azimuth with a 19 + dB gain and providing complete coverage (of the quadrant) with no blind spots. The switch may be operatively coupled to the mmW IC chips via the mmW In/Out interface.

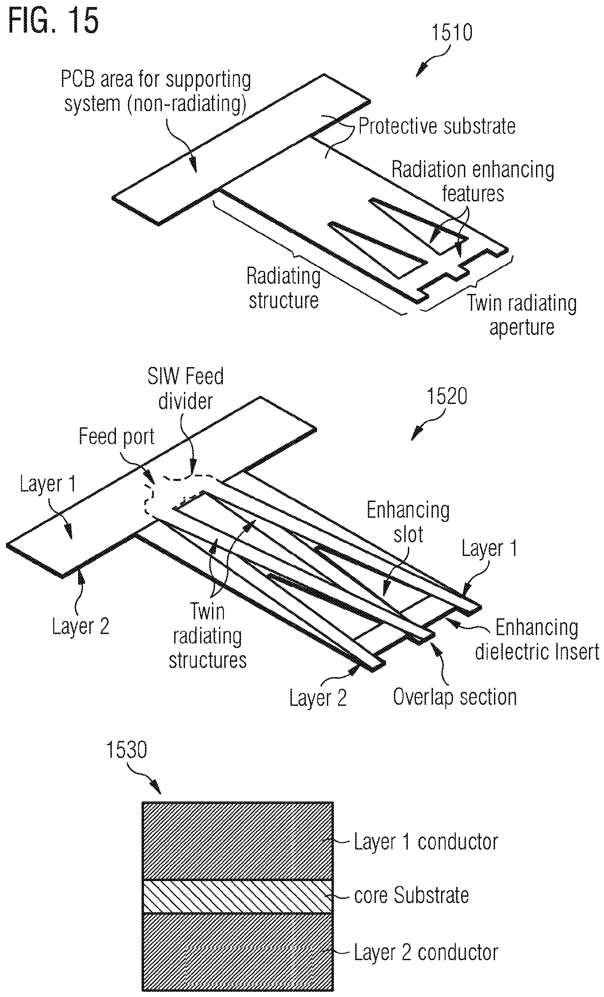

FIG. 15 shows three exemplary illustrations 1510-1530 of the switched beam antenna array elements in greater detail. The switched beam antenna array elements may be arranged as antipodal tapered slot antenna (ATSA) elements as illustrated and described herein.

The top diagram 1510 offers a view of the printed circuit board (PCB) of an antenna element of the switched beam antenna array which may be made of a protective substrate. For example, this may include a protective substrate with a thickness of about 0.05 mm to about 0.5 mm composed of low loss, thermally stable dielectrics. The backside rectangular PCB area offers an area for supporting the feed port and substrate integrated wavelength (SIW) feed divider of the conductive portions of the switched beam antenna element (shown in 1520). The PCB of the antenna element also includes a radiating structure with radiation enhancement features and a twin radiating aperture structure.

The middle diagram 1520 shows a view of the conducting layers of the antenna element of the switched beam array which may be made of a first conducting layer, Layer 1, arranged on top of a second conducting layer, Layer 2. The twin radiating structures and the enhancing slot provide for optimal coverage for over 11.25 degrees of the azimuth coverage. For example, as shown in graph 1420, each of the antenna elements may provide over 18 dB in signal gain for 11.25 degrees worth of coverage in the azimuthal direction, thereby resulting in over 18 dBs of signal gain over a whole quadrant, i.e., 90 degrees. Accordingly, eight of these ATSA antenna of these antenna elements offer a full 90 degrees of coverage for a quadrant without any blind spots, and thirty-two of these antenna elements (i.e. eight per quadrant) arranged in circular fashion offer a full 360 degrees range of coverage. It is appreciated that other configurations may be used, e.g., another number of switched beam antenna elements arranged per quadrant (other than eight) to provide the full 360 degree azimuth coverage.

The twin radiating structures may each include a respective first prong and a respective second prong, wherein each of the first prongs are made of the Layer 1 conductor and wherein each of the second prongs are made of the Layer 2 conductor as shown. Furthermore, the first prongs may be arranged over the second prongs so that at least one of the first prongs and one of the second prongs have an overlap section as shown. Each of the prongs may include an enhancing slot, with the option of providing a further enhancing dielectric inset at the mouth of each of the prongs of the twin radiating structures. The Layer 1 conductor and the Layer 2 Conductor may be the same or they may be different conductive materials.

The twin radiating structures in combination with the ultra-low-loss air filled or dielectric filled substrate integrated wavelength (SIW) power dividers and radio frequency (RF) switches enable a single port feed and the ability for beam-pattern steering by switching and selecting the desired twin radiating element of the entire switched beam antenna array.

In some aspects, two or more of the circular switched beam antenna arrays may be provided in a vertical stack to provide further performance flexibility, e.g., extended or multifrequency bands operation and switched elevation patterns.

The bottom diagram 1530 shows a diagram of a cross-section of an entire switched array antenna element, including alternating layers of the PCB protective substrate around the Layer 1 conductor, core substrate, and Layer 2 conductor according to some aspects.

In some aspects, the combination of slots, dielectric fill, and metal overlaps in specific areas of the twin radiating structures of the ATSA elements as shown in diagrams 1510-1530 provide for enhanced signal gains and bandwidth. The thin profiles and slots for enabling conformal disposition of the antenna array structure allow for it to follow the contours of a vehicular body.

The combination of twin radiating structures in the ATSA elements of the switched beam antenna array may be supplemented with a housing with reflecting and directing structural features that enable accurate direction of beams in close proximity to metallic surfaces (e.g., a vehicular body) while providing weather protection and mechanical stability.

The overall antenna structure including the phased antenna array and the circular switched beam antenna array may be manufactured on the same package/PCB assembly and housing.

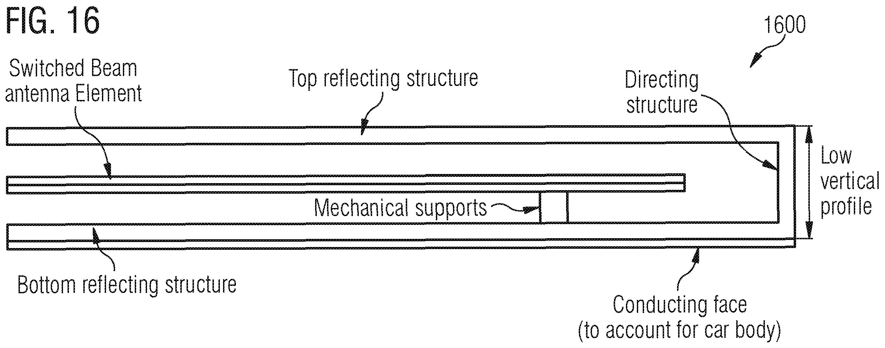

FIG. 16 shows a cross-section view 1600 of an exemplary housing with signal enhancing and environmental protective elements. The housing may include a top-reflecting structure, a directing structure, a bottom reflecting structure, as well as mechanical supports to support the switched beam antenna array elements. Furthermore, a conducting face may be provided which faces the vehicle body. The overall vertical dimension may be in the range of about 6 mm to about 10 mm depending on the frequencies of interest.

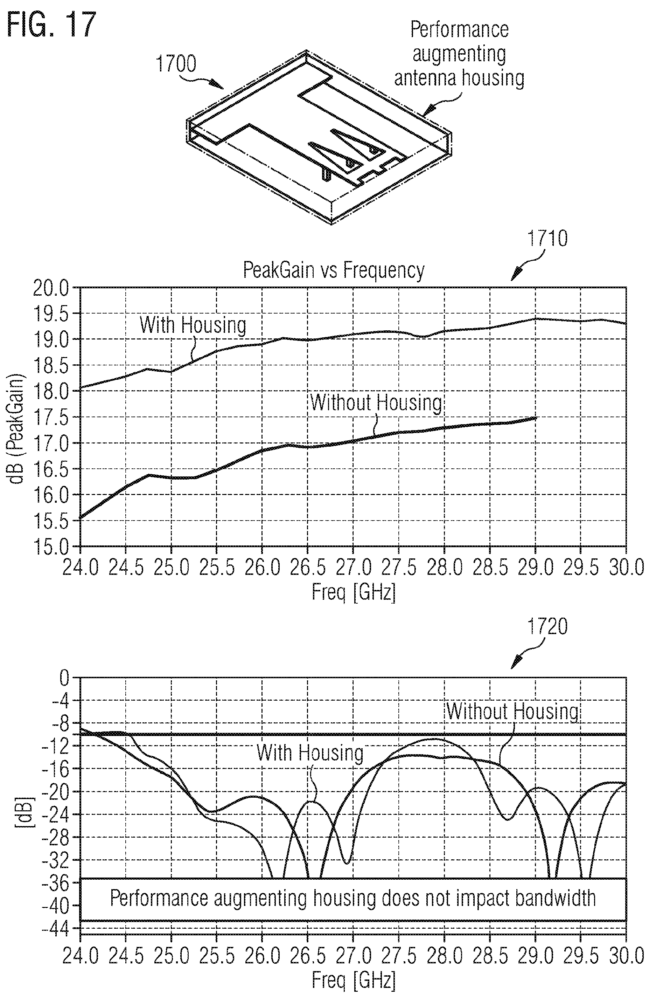

FIG. 17 shows an exemplary illustration of an ATSA antenna element surrounded by a performance enhancing housing according to some aspects and two graphs 1710-1720. The first graph 1710 showing results of a peak gain vs. frequency of the antenna element with the housing and without the housing. As can be seen in 1710, the housing improves the peak gain of the signal by 2-3 dB while also affording protection to the antenna structure from environmental factors. And, as can be seen in 1720, the housing does not impact the overall bandwidth of the switched beam antenna array structure.

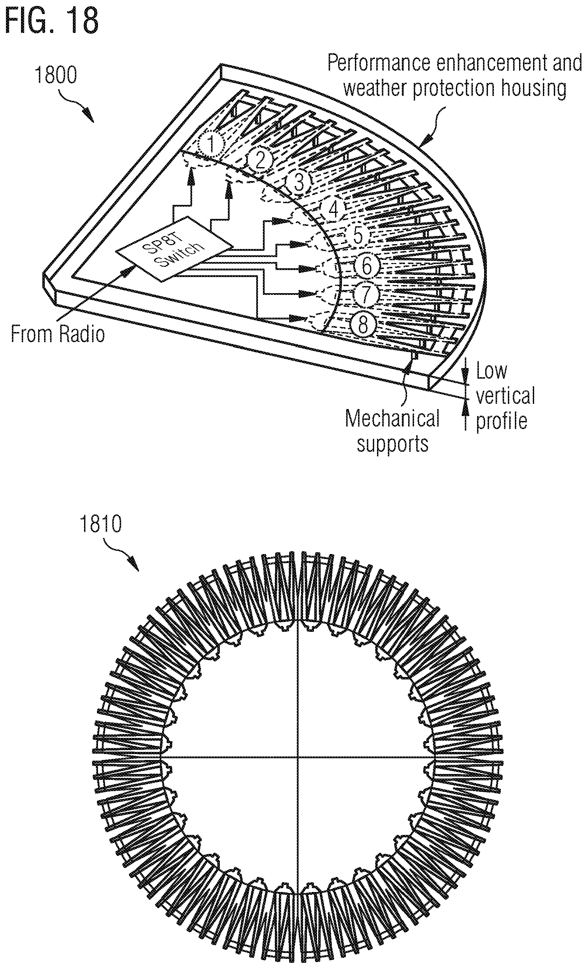

FIG. 18 shows an exemplary perspective view 1800 of a quadrant of a switched beam antenna array structure enclosed in a housing according to some aspects and an exemplary top view 1810 of an entire switched beam antenna array structure according to some aspects. In 1810, the housing is hidden in order to appreciate the switched beam antenna array structure in greater detail. As can be seen in 1810, the switched beam antenna array may a circular shape consisting of four quadrants, wherein each quadrant has eight ATSA elements as described in FIG. 15. It is appreciated that other components of the overall antenna structure (e.g., the phase antenna array, the switches and interconnections for the switched beam ATSA elements) are not pictured in this illustration.

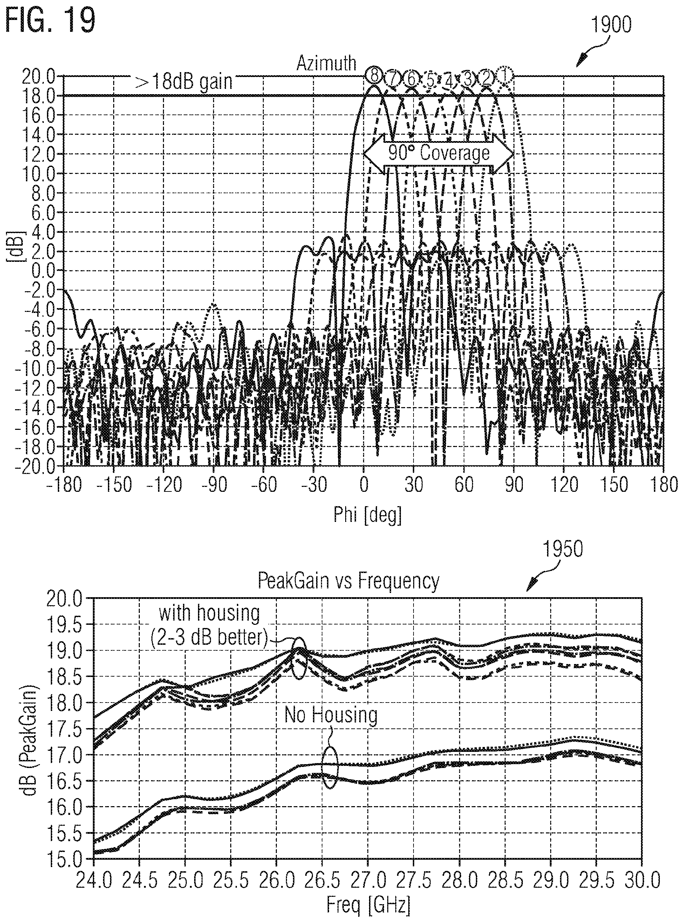

FIG. 19 shows two graphs 1900 and 1950 according to some aspects. Graph 1900 depicts the azimuth gain pattern for each of the eight ATSA elements in a quadrant of a switched beam array. As can be seen, the quadrant of the switched beam array provides greater than 18 dB gain at 90 degrees of coverage. Accordingly, 360 degrees of coverage may be attained with four quadrants as described herein. Graph 1950 shows results illustrating that the housing provides increases peak gains of 2-3 dBs for the switched beam antenna array when compared to the switched beam antenna array without the housing.

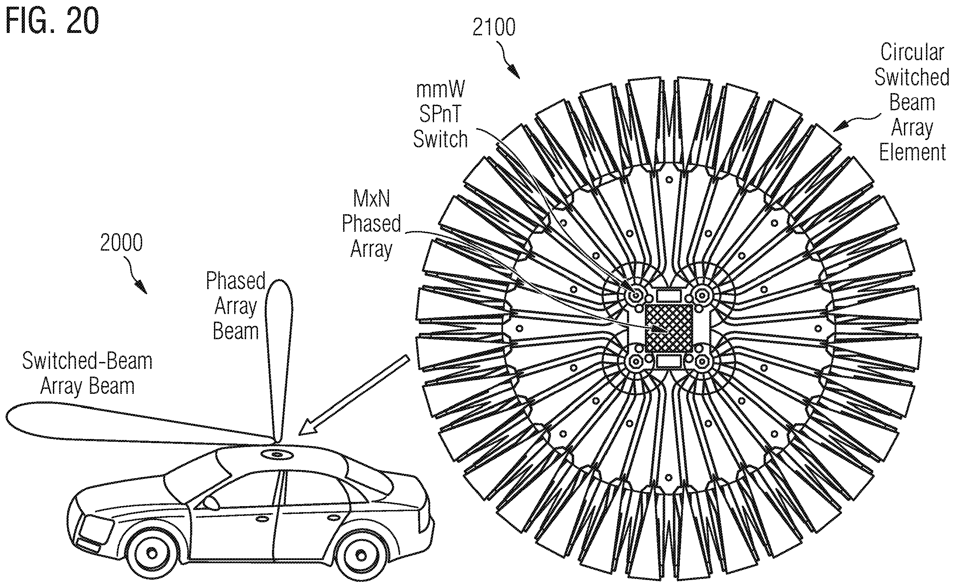

FIG. 20 shows an illustration of the on-roof combination antenna structure system topology on a vehicle 2000 and a top view of a combination antenna structure 2100 according to some aspects. The M x N phased array may be configured to project and steer a beam above the vehicle and the circular switched beam array elements may be configured to project beams in directions around the vehicle. The combined phase array and switched beam architecture ensures 360 degree coverage without blind spots in the azimuth of the integrated structure. The steerable MxN phase array in combination with the tiltable switched beam elevation beam width (as described, for example, in FIG. 11) provides coverage for the entire 180 degree hemispherical region above the vehicle.

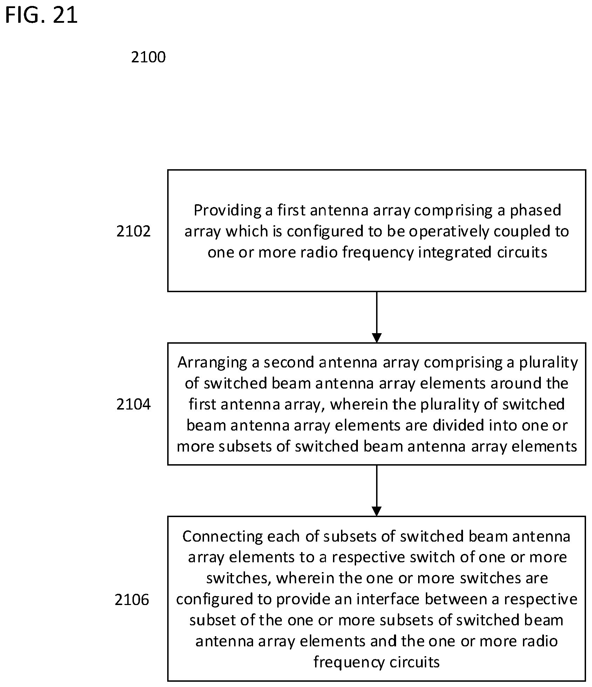

FIG. 21 shows an exemplary flowchart 2100 describing a method of manufacturing a combination antenna array structure according to some aspects.

The method may include providing a first antenna array comprising a phased array which is configured to be operatively coupled to one or more radio frequency integrated circuits 2102; arranging a second antenna array comprising a plurality of switched beam antenna array elements around the first antenna array, wherein the plurality of switched beam antenna array elements are divided into one or more subsets of switched beam antenna array elements 2104; and connecting each of subsets of switched beam antenna array elements to a respective switch of one or more switches, wherein the one or more switches are configured to provide an interface between a respective subset of the one or more subsets of switched beam antenna array elements and the one or more radio frequency circuits 2106. The method may further include steps similar to those features described herein.

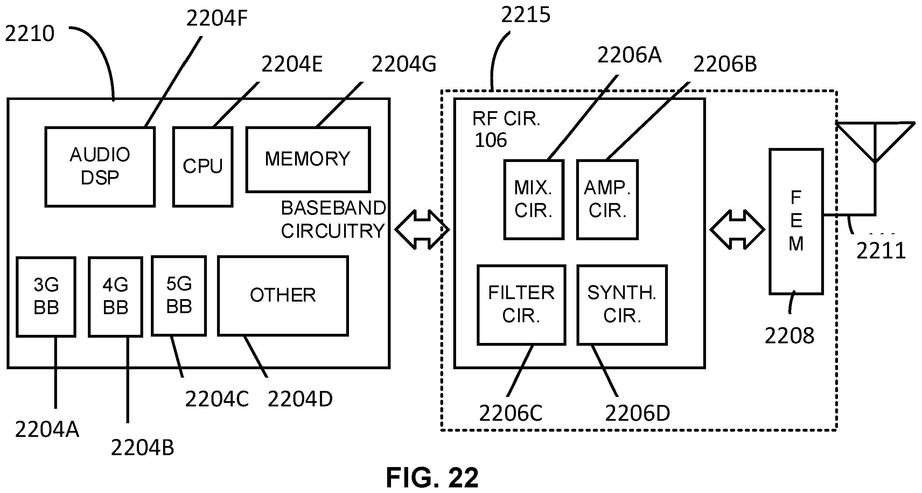

Fig. 22, shows according to an exemplary embodiment, an exemplary a radio module 2200. The radio module 2200 may, for example, include components such as of baseband circuitry 2210 and radio circuitry (e.g., radio front end modules (RFEM) 2215) in accordance with some embodiments.

As shown, the RFEM 2215 may include Radio Frequency (RF) circuitry 2206, frontend module (FEM) circuitry 2208, one or more antennas 2211 coupled together at least as shown.

The baseband circuitry 2210 may include circuitry such as, but not limited to, one or more single-core or multi-core processors. The baseband circuitry 2210 may include one or more baseband processors or control logic to process baseband signals received from a receive signal path of the RF circuitry 2206 and to generate baseband signals for a transmit signal path of the RF circuitry 2206. Baseband processing circuitry 2210 may interface the application circuitry for generation and processing of the baseband signals and for controlling operations of the RF circuitry 2206. For example, in some embodiments, the baseband circuitry 2210 may include a third generation (3G) baseband processor 2204A, a fourth generation (4G) baseband processor 2204B, a fifth generation (5G) baseband processor 2204C, or other baseband processor(s) 2204D for other existing generations, generations in development or to be developed in the future (e.g., second generation (2G), sixth generation (6G), etc.). The baseband circuitry 2210 (e.g., one or more of baseband processors 2204A-D) may handle various radio control functions that enable communication with one or more radio networks via the RF circuitry 2206. In other embodiments, some or all of the functionality of baseband processors 2204A-D may be included in modules stored in the memory 2204G and executed via a Central Processing Unit (CPU) 2204E. The radio control functions may include, but are not limited to, signal modulation/demodulation, encoding/decoding, radio frequency shifting, etc. In some embodiments, modulation/demodulation circuitry of the baseband circuitry 2210 may include Fast-Fourier Transform (FFT), precoding, or constellation mapping/demapping functionality. In some embodiments, encoding/decoding circuitry of the baseband circuitry 2210 may include convolution, tail-biting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 2210 may include one or more audio digital signal processor(s) (DSP) 2204F. The audio DSP(s) 2204F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 2210 and application circuitry may be implemented together such as, for example, on a system on a chip (SoC).

In some embodiments, the baseband circuitry 2210 may provide for communication compatible with one or more radio technologies. For example, in some embodiments, the baseband circuitry 2210 may support communication with an evolved universal terrestrial radio access network (EUTRAN) or other wireless metropolitan area networks (WMAN), a wireless local area network (WLAN), a wireless personal area network (WPAN). Embodiments in which the baseband circuitry 2210 is configured to support radio communications of more than one wireless protocol may be referred to as multi-mode baseband circuitry.

RF circuitry 2206 may enable communication with wireless networks using modulated electromagnetic radiation through a non-solid medium. In various embodiments, the RF circuitry 2206 may include switches, filters, amplifiers, etc. to facilitate the communication with the wireless network. RF circuitry 2206 may include a receive signal path which may include circuitry to down-convert RF signals received from the FEM circuitry 2208 and provide baseband signals to the baseband circuitry 2210. RF circuitry 2206 may also include a transmit signal path which may include circuitry to up-convert baseband signals provided by the baseband circuitry 2210 and provide RF output signals to the FEM circuitry 2208 for transmission.

In some embodiments, the receive signal path of the RF circuitry 2206 may include mixer circuitry 2206A, amplifier circuitry 2206B and filter circuitry 2206C. In some embodiments, the transmit signal path of the RF circuitry 2206 may include filter circuitry 2206C and mixer circuitry 2206A. RF circuitry 2206 may also include synthesizer circuitry 2206D for synthesizing a frequency for use by the mixer circuitry 2206A of the receive signal path and the transmit signal path. In some embodiments, the mixer circuitry 2206A of the receive signal path may be configured to down-convert RF signals received from the FEM circuitry 2208 based on the synthesized frequency provided by synthesizer circuitry 2206D. The amplifier circuitry 2206B may be configured to amplify the down-converted signals and the filter circuitry 2206C may be a low-pass filter (LPF) or band-pass filter (BPF) configured to remove unwanted signals from the down-converted signals to generate output baseband signals. Output baseband signals may be provided to the baseband circuitry 2210 for further processing. In some embodiments, the output baseband signals may be zero-frequency baseband signals, although this is not a requirement. In some embodiments, mixer circuitry 2206A of the receive signal path may include passive mixers, although the scope of the embodiments is not limited in this respect.

In some embodiments, the mixer circuitry 2206A of the transmit signal path may be configured to up-convert input baseband signals based on the synthesized frequency provided by the synthesizer circuitry 2206D to generate RF output signals for the FEM circuitry 2208. The baseband signals may be provided by the baseband circuitry 2210 and may be filtered by filter circuitry 2206C.

In some embodiments, the mixer circuitry 2206A of the receive signal path and the mixer circuitry 2206A of the transmit signal path may include two or more mixers and may be arranged for quadrature downconversion and upconversion, respectively. In some embodiments, the mixer circuitry 2206A of the receive signal path and the mixer circuitry 2206A of the transmit signal path may include two or more mixers and may be arranged for image rejection (e.g., Hartley image rejection). In some embodiments, the mixer circuitry 2206A of the receive signal path and the mixer circuitry 2206A may be arranged for direct downconversion and direct upconversion, respectively. In some embodiments, the mixer circuitry 2206A of the receive signal path and the mixer circuitry 2206A of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 2206 may include analog-to-digital converter (ADC) and digital-to-analog converter (DAC) circuitry and the baseband circuitry 2210 may include a digital baseband interface to communicate with the RF circuitry 2206.

In some dual-mode embodiments, a separate radio IC circuitry may be provided for processing signals for each spectrum, although the scope of the embodiments is not limited in this respect.

In some embodiments, the synthesizer circuitry 2206D may be a fractional-N synthesizer or a fractional N/N+1 synthesizer, although the scope of the embodiments is not limited in this respect as other types of frequency synthesizers may be suitable. For example, synthesizer circuitry 2206D may be a delta-sigma synthesizer, a frequency multiplier, or a synthesizer including a phase-locked loop with a frequency divider.

The synthesizer circuitry 2206D may be configured to synthesize an output frequency for use by the mixer circuitry 2206A of the RF circuitry 2206 based on a frequency input and a divider control input. In some embodiments, the synthesizer circuitry 2206D may be a fractional N/N+1 synthesizer.

In some embodiments, frequency input may be provided by a voltage controlled oscillator (VCO), although that is not a requirement. Divider control input may be provided by either the baseband circuitry 2210 or an applications processor depending on the desired output frequency. In some embodiments, a divider control input (e.g., N) may be determined from a look-up table based on a channel indicated by an applications processor.

Synthesizer circuitry 2206D of the RF circuitry 2206 may include a divider, a delaylocked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 2206D may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 2206 may include an IQ/polar converter.

FEM circuitry 2208 may include a receive signal path which may include circuitry configured to operate on RF signals received from one or more antennas 2211, amplify the received signals and provide the amplified versions of the received signals to the RF circuitry 2206 for further processing. FEM circuitry 2208 may also include a transmit signal path which may include circuitry configured to amplify signals for transmission provided by the RF circuitry 2206 for transmission by one or more of the one or more antennas 2211. In various embodiments, the amplification through the transmit or receive signal paths may be done solely in the RF circuitry 2206, solely in the FEM 2208, or in both the RF circuitry 2206 and the FEM 2208.

In some embodiments, the FEM circuitry 2208 may include a TX/RX switch to switch between transmit mode and receive mode operation. The FEM circuitry may include a receive signal path and a transmit signal path. The receive signal path of the FEM circuitry may include an LNA to amplify received RF signals and provide the amplified received RF signals as an output (e.g., to the RF circuitry 2206). The transmit signal path of the FEM circuitry 2208 may include a power amplifier (PA) to amplify input RF signals (e.g., provided by RF circuitry 2206), and one or more filters to generate RF signals for subsequent transmission (e.g., by one or more of the one or more antennas 511).

Processors of the application circuitry and processors of the baseband circuitry 2210 may be used to execute elements of one or more instances of a protocol stack. For example, processors of the baseband circuitry 2210, alone or in combination, may be used execute Layer 3, Layer 2, or Layer 1 functionality, while processors of the baseband circuitry 2210 may utilize data (e.g., packet data) received from these layers and further execute Layer 4 functionality (e.g., transmission communication protocol (TCP) and user datagram protocol (UDP) layers). As referred to herein, Layer 3 may include a radio resource control (RRC) layer, described in further detail below. As referred to herein, Layer 2 may include a medium access control (MAC) layer, a radio link control (RLC) layer, and a packet data convergence protocol (PDCP) layer, described in further detail below. As referred to herein, Layer 1 may include a physical (PHY) layer of a UE/RAN node, described in further detail below.

As discussed above, the baseband circuitry may include one or more processors and at least memory 2204G utilized by said processors. Each of the processors 2204A-104E may include a memory interface, respectively, to send/receive data to/from the memory 2204G.

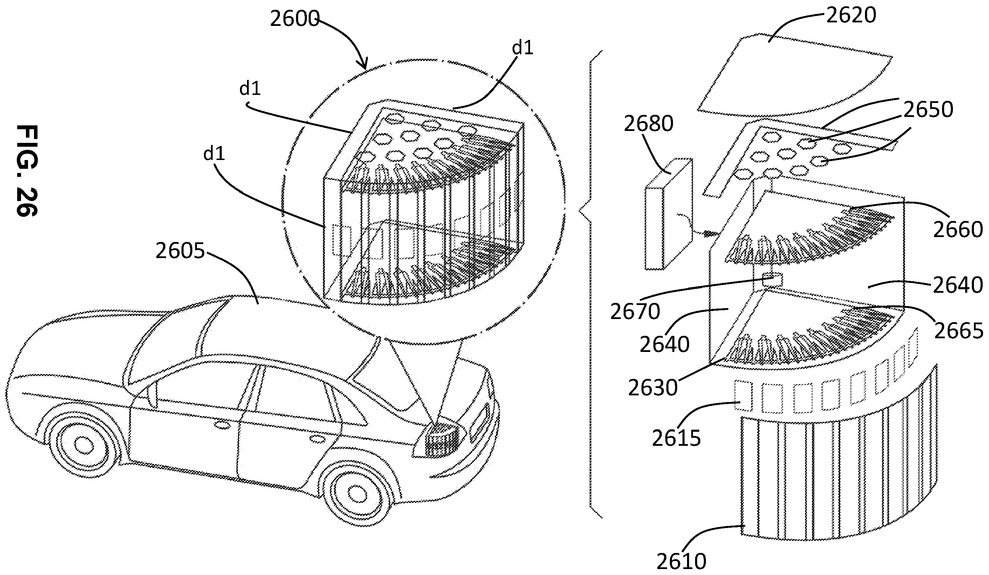

The baseband circuitry 2210 may further include one or more interfaces to communicatively couple to other circuitries/devices (e.g., an interface to send/receive data to/from memory external to the baseband circuitry 310/40), an application circuitry interface (e.g., an interface to send/receive data to/from the application circuitry), an RF circuitry interface (e.g., an interface to send/receive data to/from RF circuitry 2206 of FIG. 26), a wireless hardware connectivity interface (e.g., an interface to send/receive data to/from Near Field Communication (NFC) components, Bluetooth® components (e.g., Bluetooth® Low Energy), Wi-Fi® components, and other communication components), and a power management interface.

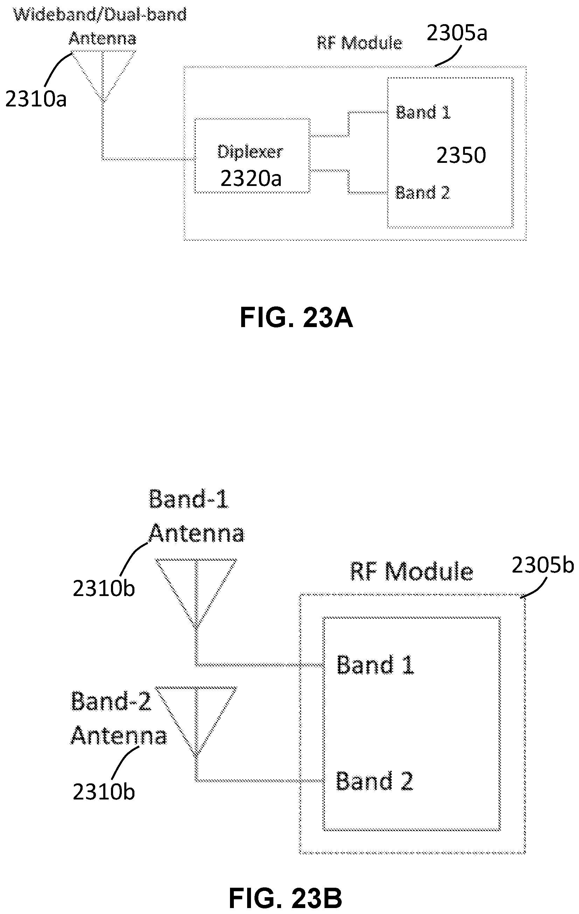

In various embodiments of the present disclosure, radio circuitry may include different ways to provide service over two different communication standards operating at two different frequency bands. Figs. 23A-C show various aspects of radio circuitry in accordance with exemplary embodiments.

Fig. 23A shows according to at least on exemplary embodiment of the present disclosure a configuration of an antenna and RF module. In the example of Fig. 23A, a wideband and/or multiband antenna (e.g., two-band antenna, three-band antenna, etc.) 2310a is coupled to a RF module 2305a that includes a diplexer 2320a. The antenna 2310a may transmit and/or receive signals in at least two different bands which can be combined by the diplexer 2320a. The diplexer 2320a can be implemented at an output of the RF module. The diplexer 2320a may be coupled to other RF components, designated 2350. The RF module 2305a and the antenna 2310a may be connected to each other through any suitable means, such as, for example RF cables.

Fig. 23B shows according to at least on exemplary embodiment of the present disclosure another configuration of antenna and RF module. In the example of Fig. 23B, multiple single band antennas 2310b are coupled to the RF module 2305b. In the case of Fig. 23B, two single band antennas are displayed, but other quantities of antennas may be used (e.g., three single band antennas). Each antenna of the multiple single band antennas 2310b may be directly connected to the RF module 2305b. Accordingly, instead of combining two or more signals (as is the case of Fig. 23A), the configuration of Fig. 23B may be instead provide a separate antenna for each provided or used band. The RF module 2305b may separately process the signal from each band.

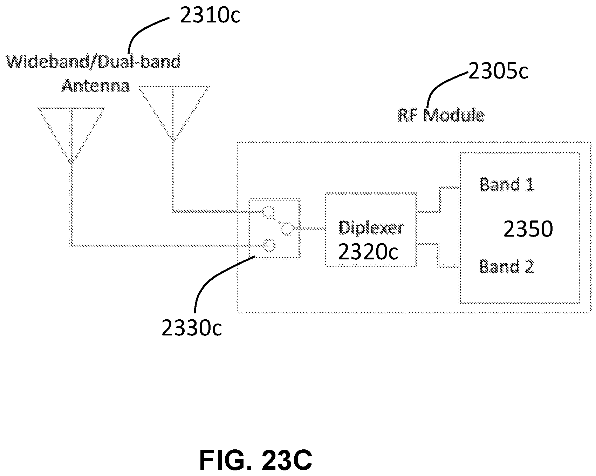

Fig. 23C shows according to at least on exemplary embodiment of the present disclosure yet another configuration of antennas and RF module. In the example of Fig. 23C, multiple wideband/multi-band antennas 2310c are coupled to the RF module 2305c. The RF module 2305c may include a switch 2330c and diplexer 2320c. The exemplary configuration of Fig. 23C can be used with the switch 2330c so as to enable beam selecting topology to further enable better performance (e.g., better coverage and/or better signal-to-noise ratio (SNR)).

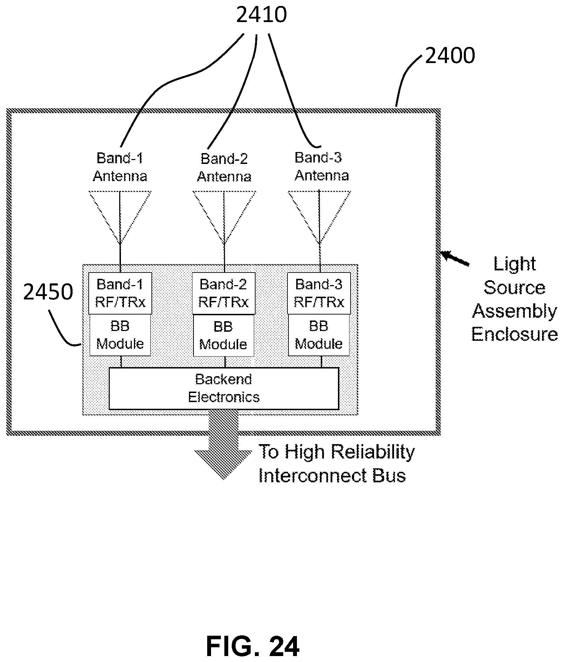

As shown in the exemplary embodiment Fig. 24, various examples of the present disclosure relate to integration of antennas, radios, backend modules, and/or other related components contained within a single individual light source assembly. That is a light source assembly may include an enclosure 2400 that may house or incorporate one or more antenna 2410. Additionally, the housing may include or incorporate radio circuitry 2450, which may include RF circuitry (e.g., RF front end components) baseband circuitry, and backend electronics. In the example of Fig. 24, the enclosure includes three separate antennas that may operate collectively, e.g., operate with transmit and/or reception diversity or may operate in a MIMO mode/scheme. In other examples, the antennas may each operate at different frequency band. For example, antennas 2410 may respectively operate in bands 1, 2, 3, which can respectively be, for example, 0.5-0.9GHz, 1.5-3.7GHz, 5-7GHz. While Fig. 24 shows only three bands other amounts and different frequencies ranges may be used and considered.

The radio or radio components described in connection with Figs. 23A-C and Fig. 24, or sub-combinations thereof, may be included in radio or radio modules described in connection in various embodiments of the present disclosure.

In accordance with various embodiments of the disclosure, multi-standard antennas may be developed or formed within the light source assembly parts and enclosures. Multi-band radios with backend electronics may be contained within one individual light source assembly. A light source assembly embedded with antenna and radio/backend assemblies may be easily assembled with mechanical manufacturing procedures and thereby substantially reducing the automotive manufacturing costs. Depending on the complexity of multi-standard radio modules, some of the backend electronics and computing parts can be also placed outside the light assembly enclosure connected by very low-frequency/-digital cables/wires.

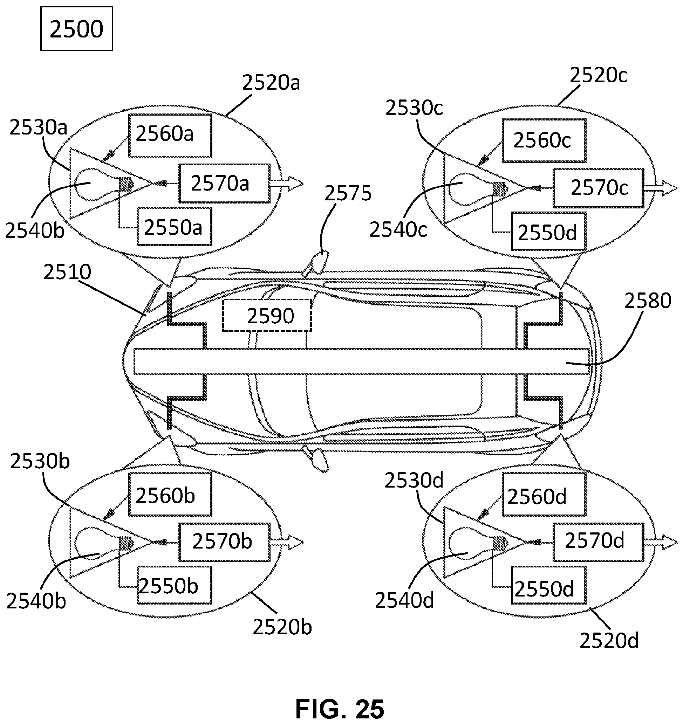

Fig. 25 shows according to at least one exemplary embodiment of the present disclosure, an exemplary wireless automotive or vehicular communication system 2500. Fig. 25, shows an exemplary vehicle 2510 incorporating a vehicular communication system 2500. The vehicle 2510 may be any suitable vehicle, e.g., car, truck, motorcycle, etc.

The communication system 2500 may include a plurality of vehicular lighting and communication assemblies. In the example of Fig. 25, vehicle 2510 includes the vehicular communication system 2500 having one or more lighting and communication assemblies 2520 (e.g., 2520a, 2520b, 2520c, and 2520d). The lighting and communication assemblies 2520 may include a light source assembly enclosure or a housing 2530 (e.g., 2530a-d), a light source 2540 (e.g., 2540a-d), a lighting control circuitry 2550 (e.g., 2550a-d), one or more (e.g., embedded) antennas 2560 (e.g., 2560a-d), and/or a radio module 2570 (2570a-d).

The light source assembly enclosure 2530 may be the housing for any type of vehicular lighting, such as headlights, taillights, stoplights, sidelights, etc. For example, as shown in Fig. 25, the light source assembly enclosure 2530a may be the housing or housing structure for a vehicular headlight. Similarly, the light source assembly enclosure 2530c may be the housing or housing structure for vehicular taillight. Similarly, the light source 2540 may be the lighting necessary for the particular type of light source assembly enclosure they are used for. For example, the light source 2540 may be any type of lighting or lamp (e.g., bulb(s), LED(s), etc.) for headlights, taillights, stoplights, sidelights 2575, etc. The lighting control circuitry 2550 may be provided for controlling the respective light source included in the respective light source assembly enclosure 2530.

Each lighting and communication assemblies may also include one or more antenna or one or more antenna elements 2560. The antenna element(s) 2560 may be integrated with and/or embedded with the light assembly housing, e.g., the light source assembly enclosure 2530. In one example, as may be described in other exemplary embodiments, one or more antenna elements may at least be partially integrated with the cover of lighting assembly.

Each of the lighting and communication assemblies 2520 may include radio and/or back end electronics 2570 or radio module 2570 or radio subsystem 2570. The radio module 2570 may include baseband and/or RF circuitry as described herein and/or other similar components. For example, the radio module may include components described in connection with Figs. 1-3.

While Fig. 25 shows the components such as the lighting control 2550 and the radio module 2570 within the enclosure or housing 2530, this is not necessarily so, and such complements may be omitted or implemented elsewhere in the vehicle 2510 or vehicle communication system 2500.

In addition, the vehicular communication system 2510 may include an interconnect bus 2580. The interconnect bus 2580 may connect to some or all of the lighting and communication assemblies 2520 of the vehicular communication system 2510. The interconnect bus 2580 may be high-speed and/or a highly-reliable interconnect bus such as a FlexRay interconnect.

Further, the vehicular communication system 2510 may also include a centralized radio control system 2590. The centralized radio control system 2590 may include hardware and/or software that interfaces and/or controls the radio functions of the various radio modules 2570. The centralized radio control system 2590 may include at least one processor and can connect the radio modules 2570 through the interconnect bus 2580.

The vehicular communication system 23500 may operate as a single, multi-standard radio communications system for the vehicle. The placement of light assemblies 2520 on and around a vehicle 2510 may provide for substantially 360-degree visibility with the radio subsystems require the same substantially 360-degree coverage. Thus, existing light assemblies may be used for the integration of these radio subsystems described herein.

The integration of radio subsystems within light assemblies consists of the disposition of multiple conducting structures (semi-transparent or not) and dielectric materials (semi-transparent or not) with dual function as wireless antenna and light diffusing/reflecting elements.

Fig. 26 shows a regular and exploded view of an exemplary light assembly according to at least one exemplary embodiment of the present disclosure. The light assembly 2600 may be a vehicular light assembly, e.g., for a taillight a vehicle 2605. The light assembly 2600 may include or be integrated with various radio elements. As shown in the example of Fig. 26, the light assembly 2600 may be shaped as a sector with dimensions of d1 equal or substantially equal to 20 cm (8 inches). Other shapes and/or dimensions may be used in other examples.

As shown in Fig. 26, the light assembly 2600 includes a front housing or cover 2610. The front cover 2610 may a lens allowing optical light to shine through the front cover 2610. Further, the front cover 2610 may be configured as an antenna radome. That is, the front housing may protect the contents of the inside of the light assembly 2600 while also permitting electromagnetic waves (e.g., RF signals) to pass there through with minimal attenuation. That is, the front cover 2610 may then be configured as an electromagnetic waveguide or millimeter wave lens. Further, the front cover 2610 may act or be configured to diffuse and/or reflect optical light, e.g., in accordance with vehicle specification/needs.

In various embodiments, the front housing 2610 may include or incorporate one or more antenna elements 2615. In at least one example, one or more the antenna elements 2615 may be disposed on or against an inside surface of the front housing 2610. Further, the one or more antenna elements 2615 may be partially or completely embedded within the front housing.

In one or more embodiments, the one or more antenna elements 2615 may be an antenna array. Further, the antenna elements 2615 may also include optical features. For example, the one or more antenna elements 2615 may have such as a structure and/or material so as to be configured to diffuse and/or reflect optical light. The one or more antenna elements 2615 may be transparent, semi-transparent, and/or opaque.

As is further shown in the example of Fig. 26, the light assembly 2600 may include other housing elements, such as a top housing member 2620, a bottom housing member 2630, and one or more back or sidewall members 2640. These housing elements 2620-2640 may be implemented to reflect and/or diffuse light. In addition, these housing may also act as antenna elements. That, the surface may operate as antenna to electromagnetic waves (e.g., RF signals). Moreover, the elements 2620-2640 may include, integrate. or incorporate antenna elements. For example, the top housing 2620 may be included with antenna elements such as the antenna array 2650 and/or the end-launch antenna array 2660. Similarly, as shown in Fig. 26, the bottom housing member 2625 may act as antenna itself and/or include antenna elements, such as the end-launch antenna array 2665. In various examples, the antennas that may be incorporated in the light assemblies such as light assembly 2600, may be transparent or semi-transparent, and further may be able to reflect and/or diffuse optical light.

At least one light source 2670 (e.g., a light bulb, a LED, etc.) may be further included in the light assembly 2600. In Fig. 26, the light source may be included with the enclosure formed by the housing of the light assembly 2600. Further, the light assembly 2600 may include a radio module 2680. The radio module 2680 may include RF circuitry and other radio electronics or components as described herein. The radio module 2680 may include any suitable hardware and/or software to implement any communication method, or protocol described herein, including, e.g., cellular communication, vehicular communication (e.g., V2X), WiFi communication, etc.

The radio module 2680 may be connected or coupled (directly or indirectly) to the one or more antenna or antenna elements of the light assembly 2600. While in Fig. 26, the radio module may be positioned outside of the assembly 2600, in other embodiment, the radio module 2680 may be positioned inside.

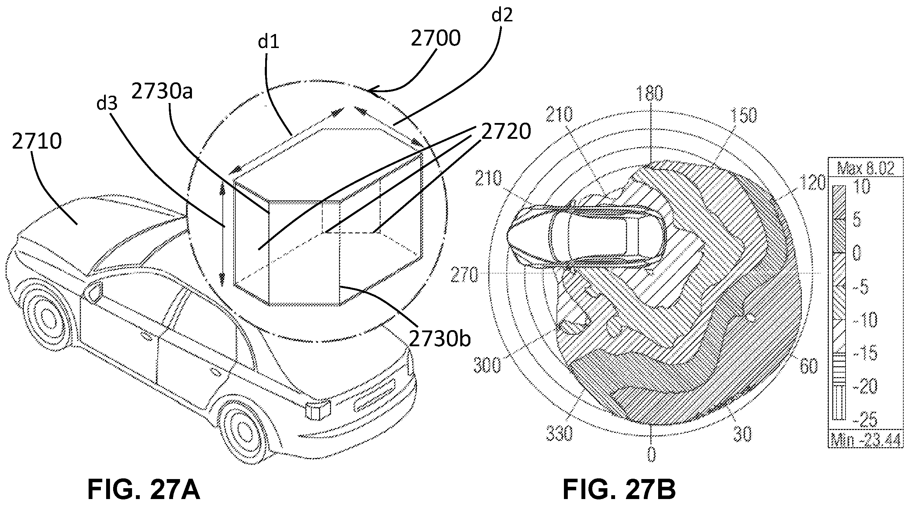

Fig. 27A shows a view of an exemplary vehicular light assembly according to at least one exemplary embodiment of the present disclosure. The vehicular light assembly 2700 may be a taillight assembly of a vehicle 2710. The light assembly 2700 may include or be integrated with various radio elements (e.g., antenna elements, radio module) and/or optical elements (light source, reflectors, diffusers, etc.).

As shown in the example of Fig. 27A, the light assembly 2700 may a front cover or lens 2720 include one or more bend sections such as bending sections 2730a, 2730b. In accordance with at least one exemplary embodiment of the present disclosure, an antenna element may be disposed in at least one of the one or more bend sections 2730a, 2730b.

In the example of Fig. 27A, each bend section 2730a-b may include a corner at the meeting of two sides of the front cover 2720. In the example of Fig. 27A, an antenna element, such as a wire antenna (e.g., a wire monopole antenna) may be located in or at the corner of at least one of the bend 2730a, b. That is, antenna element may be located in and extend along the corner. For example, given the location of the bending section of the light assembly 2700, and a thin wire with reduced thickness structure would be barely visible and have negligible impact in optical performance light assembly. Moreover, a thin monopole wire antenna or other antenna element may be implemented so as to be semi-transparent. The light assembly 2700 may include other components, such as other components described herein, e.g., optical reflectors, other types of antenna or conducting elements.

The light assembly may be any suitable size. In one example, the light assembly 2700 may have dimensions of d1 (lateral length) equal or substantially equal to 20 cm, d2 (e.g., depth) equal or substantially equal to 20 cm, and d3 (e.g., height) equal or substantially equal to 15 cm.

Fig. 27B, shows a simulated result of the light assembly 2700 including a wire monopole antenna operating at 1.9 GHz that is be concealed in the face of the tail light assembly as shown in Fig. 27A. The simulated results show a 90-degree sector may be covered with about 8dB of gain.

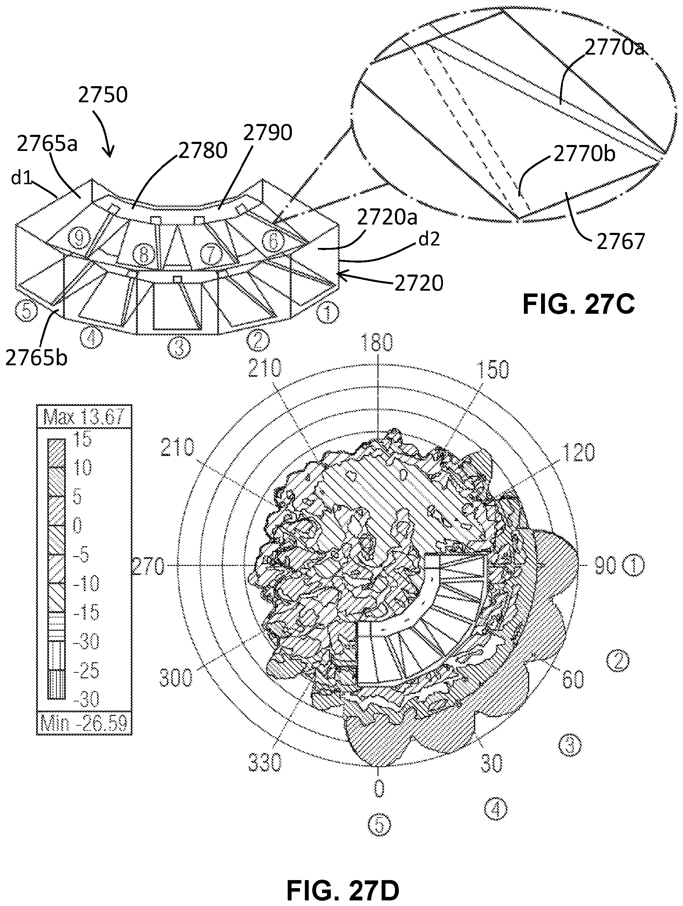

Fig. 27C shows a view of yet another exemplary vehicular light assembly 2750 in accordance with at least one exemplary embodiment of the present disclosure. The assembly 2750 may include one or more tapered slot antennas 2760. Each of the tapered slot antennas may be integrated or disposed against top and bottom housing, 2765a, b of the light assembly 2750. The light assembly may have a front cover 2720 includes one or more faces 2720a. The front cover 2720 and the top and bottom housing 2765a may each include or be made of transparent or semi-transparent materials.

Each tapered slot antenna, as shown in Fig. 27C, may include a top conducting strip 2770a and/or bottom 2770b conducting strip on opposites of a dielectric substrate 2767. The dielectric of the tapered antenna slots 2760 may be or include semi-transparent or transparent materials. The dielectric substrate 2767 including the conductive strips 2770 may be PCB antenna feed that may be connected to an antenna reference plane 2790. One tapered slot antenna may be used or, as shown in Fig. 27C, multiple tapered slot antennas 2760 may be implemented, which may operate an antenna array. That is, in the case of multiple tapered slot antennas being used, such antennas may be for diversity for MIMO due to increased gain by operating as an array. The example of Fig. 27C shows the light assembly 2750 having 9 different slot antennas. The light assembly 2700, in one example, may have depth (front to back) of d1 which is equal or substantially equal to 28 cm (11 inches) and may have a height d2 which is equal or substantially equal to 20 cm (8 inches).

Similar to the light assembly 2700, the light assembly 2750 may have bending sections that may include corner or sections where two sides of the cover meet at angle.

The light assemblies 2700 and 2750 The light assembly 2700 and 2750 may include other components, such as other components described herein, e.g., optical reflectors, other types of antenna or conducting elements. The antenna components or elements of the light assemblies 2700 and 2750 may be connected, directly or indirection, to one or more radio modules (not shown). Such radio modules may include RF circuitry.

Fig. 27D shows simulated results of the performance of the light assembly 2750.

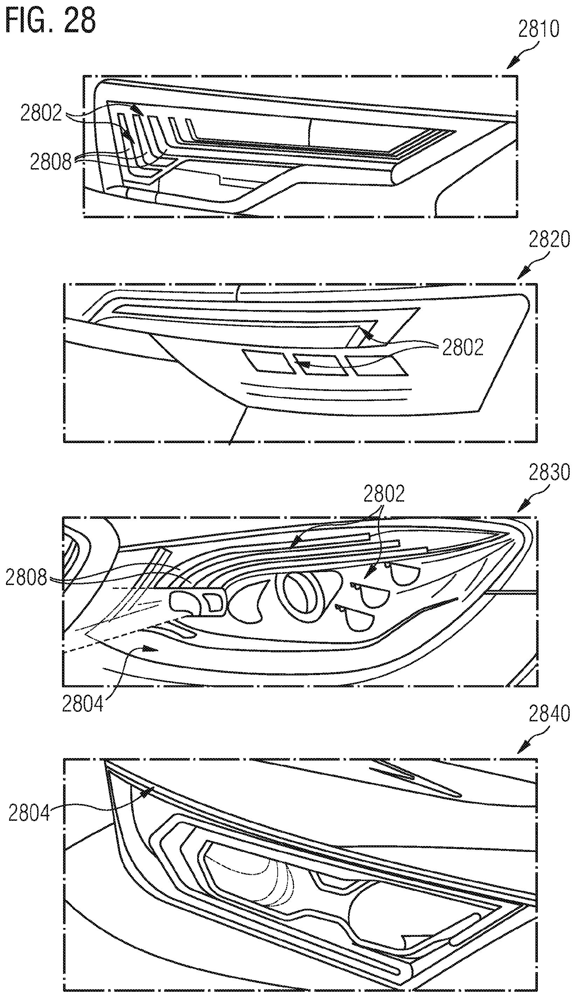

Fig. 28 shows views 2810, 2820, 2830, and 2840 of several vehicular light assemblies. As shown, taillight assemblies may include dark or black or near black areas. In the example of views 2810-2840, the various depicted light assemblies may have dark regions or lines 2802. These regions may be non-illuminated or low-illuminated sections of a cover or lens of a vehicle light assembly. That is, these areas may be configured to be darker and in contrast to other laminated areas 2808 of the lens or cover. In particular, the dark region or areas 2802 may appear as borders or separators to different light areas as in the exemplary views 2810-2840. These areas may indicate or delineate radiant portions of the vehicle light assembly.

Accordingly, these dark areas 2802 may substantially not allow light to pass through, e.g., may significantly attenuate light. They may also be located in bending sections or lines of the light assembly. Further, the dark areas may be implemented as a ring 2804 around or substantially around the periphery of the light assembly, e.g., around the periphery of a cover/lens of the light assembly, as shown in vies 2830 and 2840.

In one or more exemplary embodiments of the present disclosure, one or more antenna elements may be implemented within (e.g., completely or partially embedded) at the dark areas. For example, the one or more antenna elements may be positioned against or behind the dark areas, e.g., inside the light assembly but behind the dark areas. These antenna elements positioned at the dark areas may be concealed or not visible, or not easily visible from an external perspective (e.g., from outside the lighting assembly) due to the dark areas. Further, such antenna elements may be a conducting element that may be realized as opaque conducting strips or wires, or alternatively as semi-transparent conducting strips integrated, directly printed on, or positioned embedded in the light assembly cover.

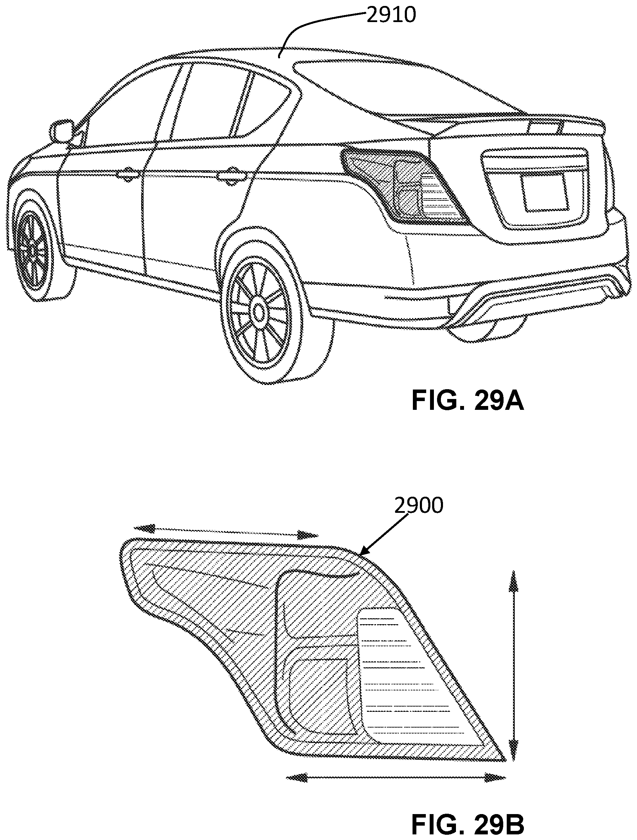

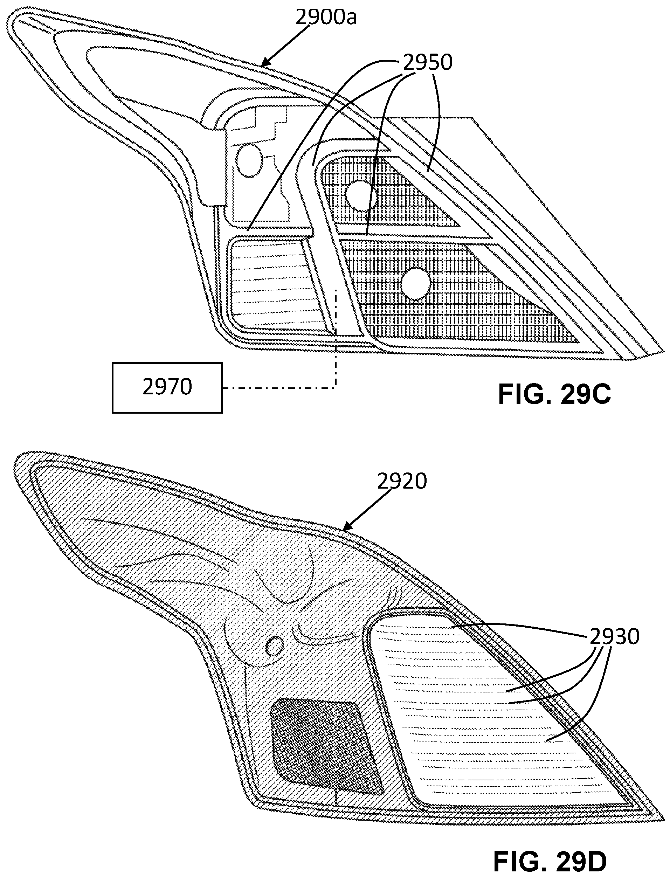

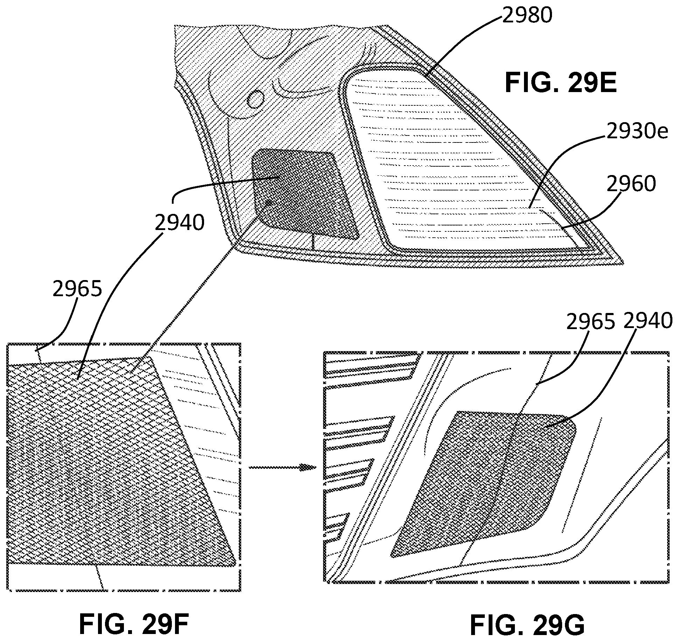

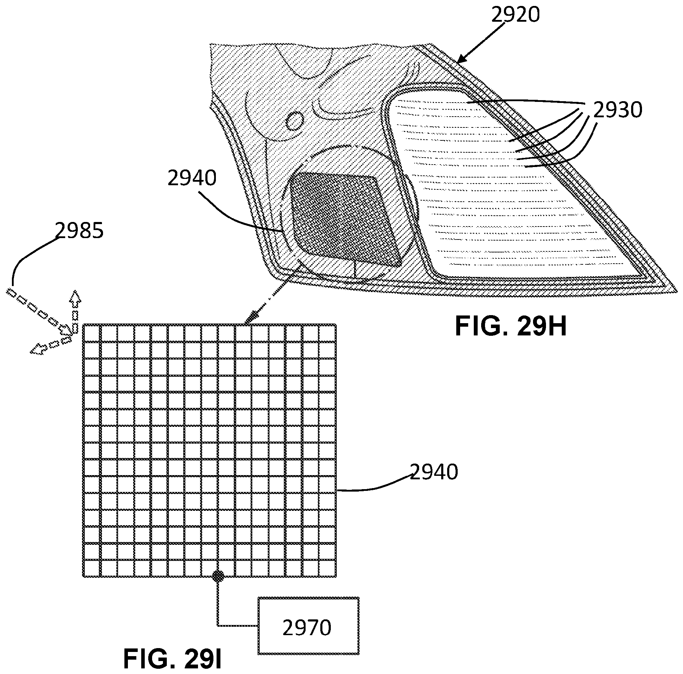

Fig. 29A show a perspective rear view of a vehicle 2910 according to one or more embodiments of the present disclosure. Fig. 29B shows an enlarged view of a light assembly 2900 (e.g., taillight) of the vehicle 2910 of Fig. 29A. Fig. 29C shows a view of the light assembly 2900a without a cover or lens 2920 of the light assembly 2900. Fig. 29D shows the cover 2920 alone of the light assembly 2900. Fig. 29E shows an enlarged portion of the cover 2920.

The example of Fig. 29C shows the vehicle light assembly 2900a without the cover 2920. In accordance one or more embodiments, components e.g. sections or parts 2950 within the vehicle light assembly 2900 may act as a conducting element, e.g., may act as an antenna element. In at least one example, the metallized surfaces may be directly connected to a radio (e.g., radio module) 2970 to operate as an antenna element for the radio.

In the example of Fig. 29C, one or more metallized surface or metallized surface areas 2950 can include a part of an optical reflector. That is, in accordance with at least one exemplary embodiment of the present disclosure, an optical reflector (e.g., optical reflector of a vehicle light assembly) or parts thereof, can act or operate an antenna. Such an optical reflector may be particularly useful as antenna elements at the lower frequency bands (e.g., less than 1GHz, such as in 2700 MHz-1 GHz range) given the relatively large dimensions required for efficient antennas.

In accordance with one or more exemplary embodiments of the present disclosure, one or more conducting elements, e.g., one or more antenna elements may be disposed along a light assembly cover, such as the cover 2920. As shown in Fig. 29D, the vehicle lens/cover 2920 may include one or more grooves, collectively or individually designated 2930. In one or more exemplary embodiments, conducting elements (e.g., antenna elements) may be placed or positioned within and/or against the grooves 2930. The conducting elements may fit inside the (e.g., force fit) or may be kept in placed there with additional means e.g., tape, adhesive (e.g., glue), or other suitable fastening means.

The conducting elements may be realized by opaque conducting strips or wires (sheathed or unsheathed). The conducting elements may be semi-transparent conducting strips integrated or directly printed on the cover, e.g., in the grooves.

Viewed from the outside perspective (e.g., facing the cover from outside the vehicle 2910), a wire 2960 disposed along grooves 2930 on the inside face of the cover on transparent surfaces may be concealed or substantially not visible to a human eye. In various examples, grooves including conducting elements such as the grooves 2930 may be located in any suitable location of a vehicle cover or lens. In Fig. 29E, the wire 2960 is shown only visible at the end and outside of the groove 2930, but not visible along the grove.

In the example of Figs. 239A-29E, the grooves 2930 may be located in an illuminated area 2980, such as, for example, a radiant or high-radiant section or area for lights, such as reversing lights in the case that the light assembly 2900 is a taillight assembly.

Fig. 29E shows an enlarge view of a patterned surface area 2940, e.g., a mesh area. In at least one example, the patterned surface area 2940 may be configured as an optical reflector and/or diffuser. In one or more exemplary embodiments, the dimension of the patterned surface area or mesh 2940 may be so that a conducting element, e.g., an antenna element (e.g., wire monopole realized by, for example, a 30AWG wire), located behind the mesh 2940. Such a conducting element may be concealed or nearly invisible from an external perspective. That is, the dimensions of the mesh (e.g., dimension of holes) are such so as to conceal the conducting element(s). The example of Fig. 29F and 29G show a wire 2965 located or positioned inside of the light assembly 2900, behind an inside facing side of the cover 2920. From outside the light assembly 2900, the wire 2965 may be concealed or extremely low visibility. By contrast, from an inside view of the light assembly 2900, the wire 2965 may be easily visible.

As noted, in one or more embodiments, a vehicle light assembly cover may include a pattern surface area, such as mesh structure 2940. In one or more further embodiments, such a mesh structure may operate as antenna. That is, as one example, the cover 2920 of Figs. 239A-29I may include a mesh structure 2940 configured to operate as an antenna element, e.g., a patch antenna.

Fig. 29I shows an exemplary simplified representation of the mesh conducting structure 2940. The mesh conducting structure 2940, acting as antenna, is connected to a radio or radio module 2970. Accordingly, the patterned surface area/mesh 2940 may act as both an optical element (e.g., an element that reflects, diffuses, and/or transmits light in a required optical pattern for a vehicle) and act as antenna element (e.g., a monopole). As also shown in the example of Fig. 29I, optical light 2970 impinging on the mesh structure 2940 can get reflected and diffused.

The mesh structure or the patterned surface area 2940 of the cover 2920 may be only one example of a 2D conducting structure configured as an antenna or antenna element. In further exemplary embodiments, other 2D or 3D structures, e.g., structures integrated with a vehicle light assembly, may also be used to operate as antennas in addition to providing other optical functions for a vehicle light assembly. Such other 2D or 3D structures may be implemented or realized as other sections or parts of a vehicle light assembly cover, e.g., cover 2920. In one example, areas that may traditionally be plastic or polycarbonate may be realized or implemented as a conducting structure and act as antenna, e.g., when connected to radio module.

In at least one exemplary embodiment, sections of a front cover of vehicle light assembly may include or incorporate dielectric antenna elements instead of or in addition to metallic antenna elements. That is, such elements may be a part of the front cover, and for example such antenna elements may be integral or continuous with a front cover or lens of vehicle lighting assembly, such as cover 2920. Further, such an antenna element may also be connected to a radio module associated with the lighting assembly.

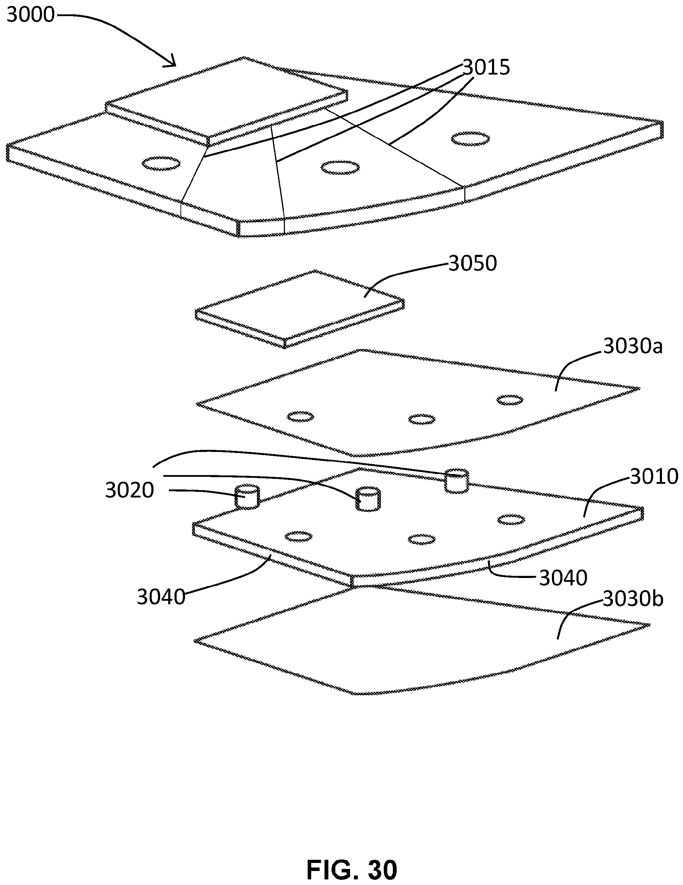

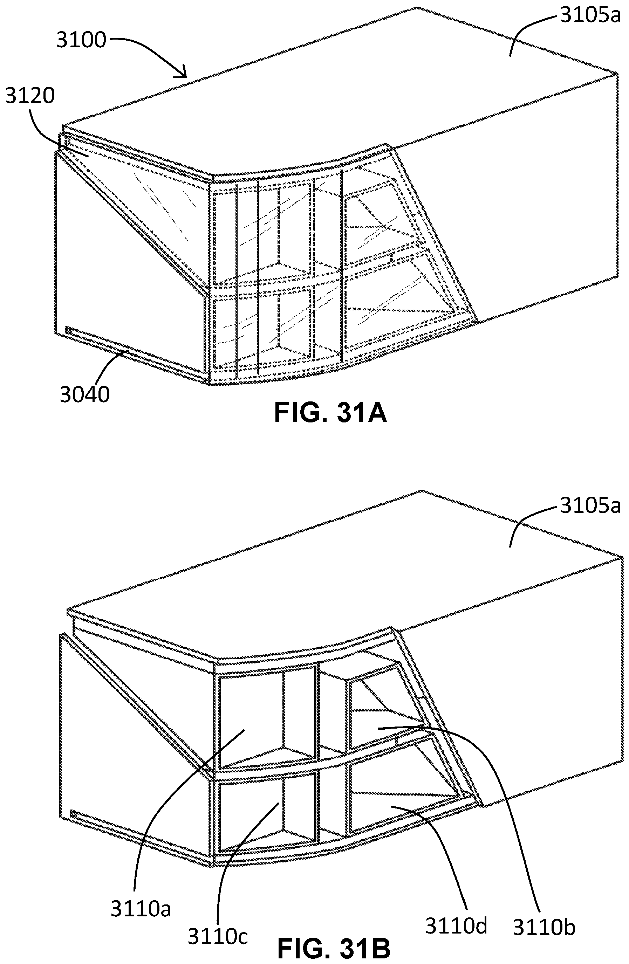

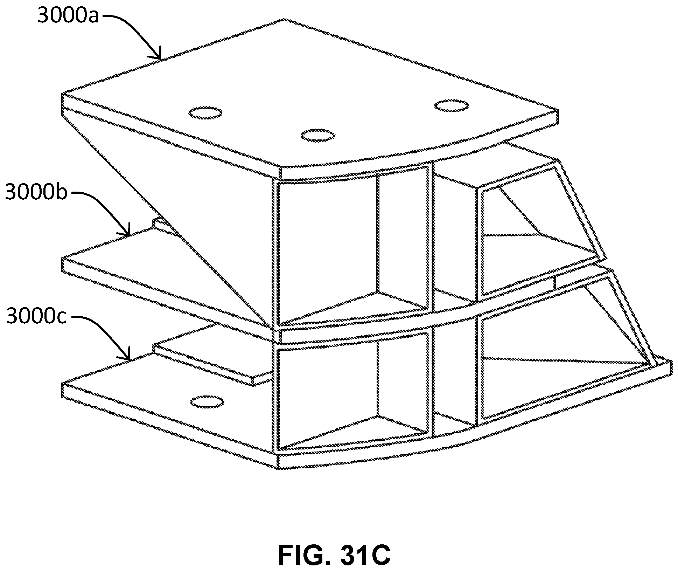

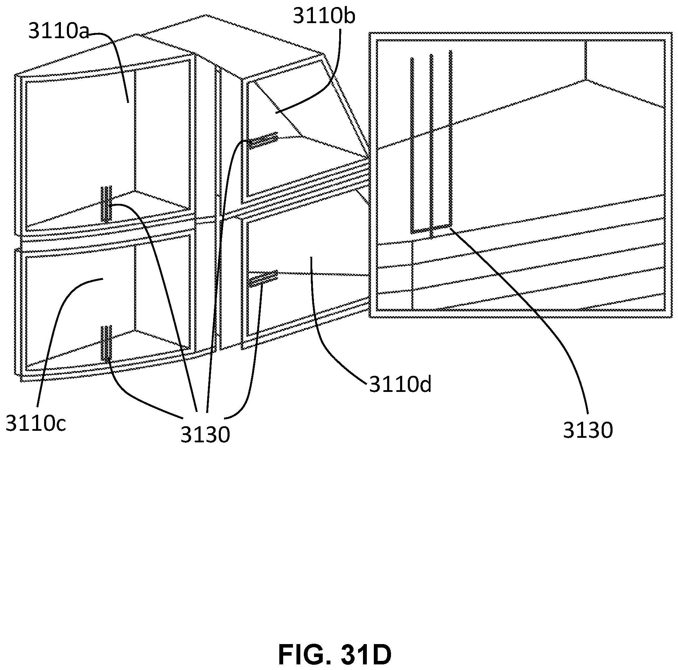

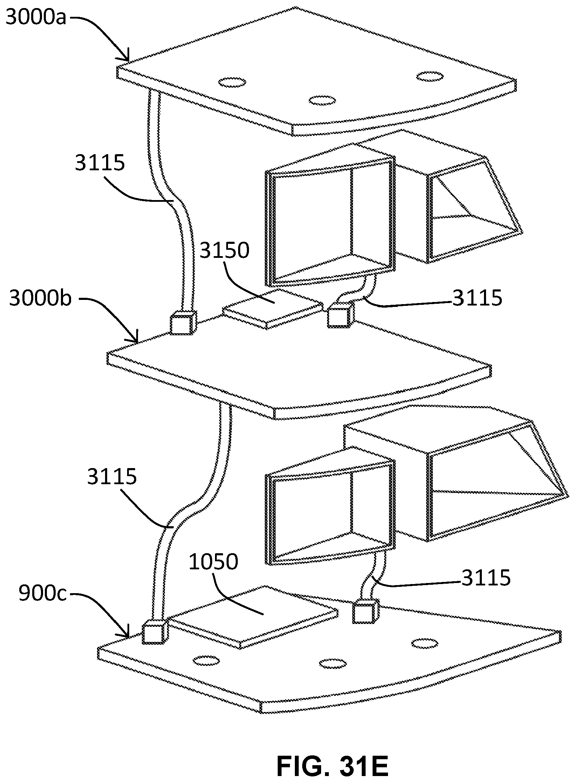

Fig. 30 show a perspective view and a corresponding exploded perspective view of a light and communication structure element 3000 according to one or more exemplary embodiments of the present disclosure. The structure 3000 may be part of a light assembly, such as the light assembly disclosed in in Fig. 31.

The exemplary light and communication structure element may include at least one substrate 3010. The substrate 3010 may include a cavity (e.g., a microwave cavity or a substrate integrated waveguide radiator) containing a low-loss dielectric material allowing transmission or propagation of RF signals. That is, the substrate 3010 may act as microwave or millimeter waveguide. Further, the low-loss dielectric material may be optically transmissive, that is the material allowing transmission or radiation of optical light in addition to RF. According, the substrate may act as a radiating cavity for both optical light and RF. In other words, the microwave cavities may work as optical reflectors to produce a desired optical illumination pattern as well as a desired antenna pattern or performance.

In other embodiments, the substrate may be a vacuum cavity or substantially a vacuum, instead being or containing dielectric material. As such, the vacuum of the substrate 3010 may also allow or be capable of both optical light and RF wave radiation/transmission.

In at least one exemplary embodiment of the present disclosure, the substrate may be subdivided into a plurality of separate cavities. That is, the substrate 3010 may contain one or more vertical via walls 3015 that define a plurality of cavities 3010a-c of the substrate 3010.

The substrate 3010 may be at least partially contained, enclosed, or sandwiched by a pair of conducting plates or faces 3030a, 3030b. As shown in Fig. 30, the first conducting face 3030a may be positioned over a top surface of the substrate 3010 and over a bottom surface of the substrate. In one or more embodiments, the pair conducting faces 3030a, 3030 may be disposed directly on the substrate or through one or more intermediary layers or materials (e.g., an adhesive). As such, the conducting faces 3030a, 3030b and the substrate 3010 may form a vertical stack. In at least one example, the conducting faces may act as optical reflectors and/or a RF ground.

One or more portions of the lateral edge of substrate 3010, e.g., along the periphery of the substrate 3010, may operate or act as one or more radiating faces, e.g., radiating faces 3040. The radiating faces 3040 may allow optical light and RF waves to exit and/or enter the substrate 3010. The radiating faces may be vertically extending portions of the substrate that are not covered by other materials.

Further, as shown in the example of Fig. 30, the substrate 3010 may include one or more lights sources, individually or collectively designated 3020. The light sources 3020 may be disposed within the substrate, e.g., in a cavity. Each of the light sources 3020 may be any suitable lighting device or source, including, for examples, light bulbs, light-emitting diodes (LEDs), etc. The light sources 3020 in one or more examples may have top and/or bottom surfaces respectively coplanar with the top and/or bottom surfaces of the substrate 3010.

The light and communication structure element 3000 may further include or allow an electronic component 3050 to be disposed on over the substrate 3010. The electronic component or electronic module 3050 may include RF circuitry and/or light control circuitry. The electronic module 3050 may be coupled or connected to the light sources and/other components.

Fig. 31A-E shows in perspective views, a vehicular light assembly 3100 according to one or more exemplary embodiments. In Figs. 10A and 10B, the light assembly 3100 is integrated or positioned within a vehicle body section 3105. Fig. 31A shows the light assembly 3100 in the vehicle body section 3105 with a front cover 20. Fig. 31B shows the light assembly 3100 of Fig. 31A in the vehicle body section 3105 but without the front cover 20. Fig. 31C shows the vehicle light assembly 3100 without the vehicle body section 3105. Fig. 31E is an exploded view of the vehicle light assembly 3100.

As shown in Fig. 31A-E, the vehicle light assembly may include a plurality of the light and communication structure elements, e.g., the light and communication structure elements 3000 of Fig. 30. The light and communication structure elements 3000a-c of the light assembly 3100 may be vertically stacked or aligned. In one or more embodiments, the structure elements 3000a-c may be coupled or connected to each other. In the case of Figs. 31A-C, the substrate may be connected to each other using RF interconnect cables 3115. Further, interconnects may couple the substrates of structure elements 3000a-c to other elements or components.

One or more optical reflectors may be disposed between structure elements 3000. As shown in Fig. 31A-E, the optical reflectors 3110a and 3110b are disposed or sandwiched between structure elements 3000a and 3000b while the optical reflectors 10c and 10d are disposed or sandwiched between the structure elements 3000b and 3000c.

The optical reflectors 3110a-d of the light assembly 3100 may be any suitable type of optical reflectors configured to deflect light in accordance with vehicular specification or needs, including optical reflectors described herein. In Fig. 31, the optical reflectors 3110a-d are depicted as be optical cavities. The optical reflectors 3110a-d may be of metal or include metal sections, such as including metallized surfaces. In accordance with one or more further embodiments of the present disclosure, the optical reflectors 3110a-d may operate as an antenna or antenna element.

As noted in connection with Fig. 31A, the light assembly 3100 may include a cover 3120, e.g., a front cover or lens. The front cover 3120 may be any cover described herein. The front cover may allow propagation or transmission of both optical light and RF waves. Also, as described in various embodiments of the present disclosure, the front cover 3120 may include or incorporate one or more antenna elements, e.g., on or at least partially embedded in the over. Such antenna elements may be concealed by the front cover 3120.

Fig. 31D shows exemplary antenna elements, individually and collectively designated 30 that may be concealed by the front cover 3120. The antenna element 3130 as shown are thin conducting strips or wires that may operate as wideband monopole antenna. In one example, such conducting strips may have a thickness or diameter of 0.2 mm and may, for example, operate in 1.7-2.5 GHz range.

Further, the light assembly 3100 may include one or more electronic modules 3150. Each of the electronic modules 50 may include RF circuitry and/or light control circuitry. The modules 3150a, b may be directly or indirectly connected to various components of the light assembly 3100, e.g., any or all of the structure elements 3000a-c, the optical reflectors 3110a-d, and antenna elements.

As described in various embodiments described herein, light assemblies or prats thereof may include a plurality of antennas elements. These plurality antenna elements may be connected to radio/radio modules, e.g., through cables and/or other suitable wiring means. These antenna elements may each operate independently or may be operative collectively. In other examples, a radio module(s) may operate in a multiple-input-multiple-output (MIMO) mode, and the plurality of antenna elements (or a subset thereof) connected the radio module(s) may be configured to operate as MIMO antennas. Similarly, the plurality of antenna elements, or a subset thereof, may be configured to operate with transmit and/or reception diversity.

Wireless communication services for vehicles include AM/FM radio, DTV, WiFi, cellular, WiMax, LTE, GPS, PCS, XM-radio, and vehicular radar. These communication services operate over a wide range of spectrums. For example, AM/FM radio (operate in the MHz range), DTV, digital audio, remote keyless entry (RKE), tire pressure monitoring systems (TPMS), etc. operate at frequencies of less than 1 GHz. And, GPS, BT, SDARS, WiFi, WiMax, cellular, DSRC (V2V, V2I), XM-radio (covering upto 7 GHz), and other next generation automotive radios operate at frequencies between 1 GHz and 7GHz. Additionally, vehicular radars operate at a frequency of 24 GHz for side detection radars and at a frequency of 79 GHz for front and back detection radars for collision avoidance.

Each of these wireless communication services requires a particular antenna system to provide wireless connectivity. The individual antenna systems can be placed at different locations in or on a vehicle, such as, around the perimeter of windows, under the shark fin, under a vehicle body (e.g., cavity antennas), car handles, bumpers, and so on. The antenna systems may be placed on a variety of different materials including glass, plastic, metal, or any combination of materials utilized for an autobody. For example, sheet moulding compound (SMC) materials may be used for manufacturing fuel-efficient and lighter vehicles.

Embedded antennas, such as, slot dipole antennas, bow-tie antennas, Planar Inverted Conical Antennas (PICA), PICA with a slot, CPW-FED PICA with a slot and many other antennas with very high bandwidth have been used in vehicles mainly for protocols below 6GHz frequencies.

Advanced wireless technology is providing wireless connectivity in new frequency bands (such as above 6GHz and mmWs) as well as spectrum sharing below 6GHz to achieve higher data rates and bandwidths for communication. However, conventional embedded antennas for vehicles include V2X antennas only operate in frequency bands below 6 GHz. Most of these embedded antennas are not designed to provide security, ultra-high data-rate, or interference management. These features are important for inter vehicular communications involving 5G- or enhanced WiFi.

Additionally, the number of communication services for connected vehicles is increasing. More and more antennas and radio systems will be needed for different protocols and standards. The inclusion and placement of these individual antennas and radio systems should not compromise esthetic and aerodynamic requirements or significantly increase costs.

A universal, cost-effective embedded antenna that addresses the co-existence, interference, security, and cost requirements is desirable. Each antenna system hardware requires independent ration and assembly features for ensuring the required performance/functions and thereby increasing cost of overall connected cars of future.

Various aspects of the present disclosure describe a vehicle embedded antenna system with both omnidirectional and directionally steered antennas that allows multiple standards/protocols co-existing with one another without interfering with each other.

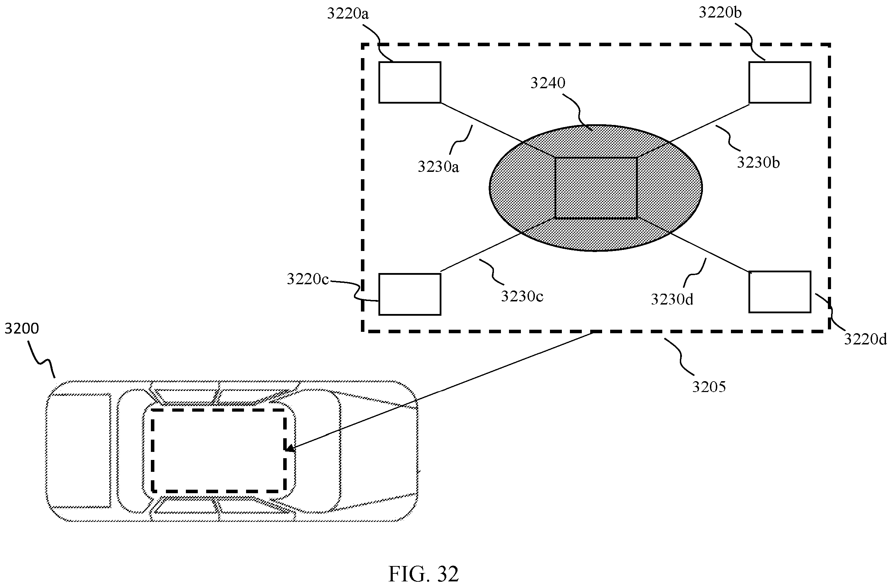

FIG. 32 illustrates an example of an integrated embedded antenna system according to various aspects of the present disclosure. Specifically, FIG. 32 illustrates a vehicle 3200 and a top view of the roof 3205 of the vehicle. For example, FIG. 32 shows co-existence of different antenna systems on a vehicle roof.

In particular, FIG. 32 shows an integrated antenna system including a plurality of sub-10 GHz antennas and a millimeter wave (mmW) antenna system. The mmW antenna system provides full hemispherical coverage of the vehicle. The mmW antennas are directional and provide secure and interference free communication. The sub-10 GHz antenna system provides lateral and longitudinal coverage of the vehicle. The sub-10 GHz antennas are both omnidirectional and directional and provide full-coverage in the cardinal directions, large bandwidths, and secured communications as needed.

Referring to FIG. 32, the sub-10 GHz antennas 3220a-3220b may be configured as directional antennas and disposed at four corners of the roof of a vehicle. The positions of the sub-10 GHz antennas provide coverage when configured as directional antennas to communicate with communication equipment installed along a road. For example, at least one of the sub-10 GHz antennas may be configured to provide directional communication with a road side unit such as a Dedicated Short Range Communications (DSRC) unit located on a side of a road. A DSRC unit which may be part of the V2X system operates around the 5.9 GHz frequency band. A DSRC unit which may be part of the V2X system operates around the 5.9 GHz frequency band. Alternatively, the sub-10 GHz antennas 3220a-3220b may be configured for sub-10GHz cellular or WiFi communications.

Referring to FIG. 32, the mmW antenna system 3240 may be disposed at the center of the roof of a vehicle. The mmW antenna system 3240 may be a combo mmW antenna system which includes a phased array and switched-beam array. The mmW antenna system may be configured to provide MIMO communication with 5G base units. The mmW antenna system may be configured to provide omnidirectional communication to provide an ad-hoc wireless network to communicate with other vehicles on the road. The mmW antenna system may operate at the 28GHz, 39GHz, 60GHz, and 73GHz frequency bands.

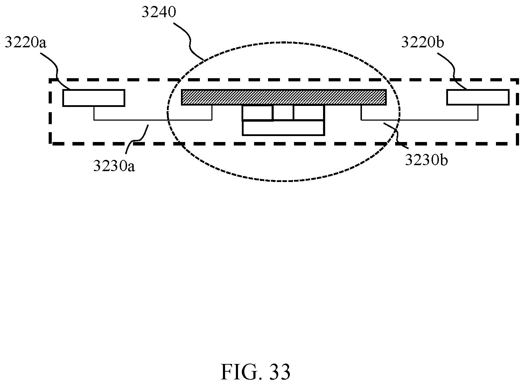

FIG. 33 illustrates an example of a side view of the integrated embedded antenna system of FIG. 32. The mmW antenna system 3240 and plurality of sub-10 GHz antennas 3220a-3220d are embedded in the top of the roof of the vehicle 3200. Referring to FIG. 33, the plurality of sub-10 GHz antennas 3220a-3220d are coupled to the mmW antenna system 3240 via connectors 3230a-3230d.

The placement of multiple types of mmW antennas and sub-10 GHz antennas at the same location allows sharing of heatsinks and other related integration/assembly features resulting in a lower cost implementation.

A universal V2X antenna system where 5G+ based V2X antenna/radio systems can co-exist within a vehicle without impacting each other's performance and can share design, hardware assembly in a cost-effective manner. For example, LTE-A/WiFi, DSRC, mmW communication systems can be aesthetically placed on a vehicle roof, side door, or vehicle bumper along with auto-radars and all services can share hardware and assembly features, like heatsink, PCB, EMI/RFI/thermal/mechanical structures to remain cost-effective.

The co-existence of mmW and sub-10GHz antenna/radio systems as well as omni- and directional antenna architectures enabling the systems to share hardware and assembly features with reduced costs.

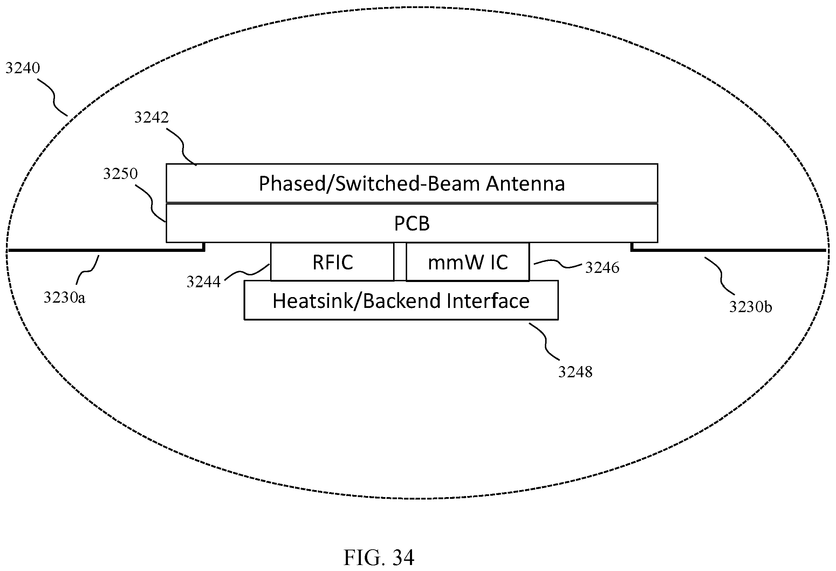

FIG. 34 is a schematic diagram of a portion of the integrated antenna system of FIG. 33. FIG. 34 illustrates an example of an integrated antenna system with common assembly features according to various aspects of the present disclosure. Referring to FIG. 34, the mmW antenna system 3240 includes a phased antenna design and a switched beam antenna design 3242 provided in a same portion of a printed circuit board (PCB) 3250. An integrated circuit (mmW IC) for controlling the mmW antenna system 3246 and an integrated circuit (RFIC) for controlling the plurality of sub-10 GHz antennas 3244 are provided in a common area. For example, the common area may be a portion of the PCB near the mmW antenna design 3242. The mmW IC 3246 and the RFIC 3244 may share a common heatsink. The mmW IC 3246 and the RFIC 3244 may also share a common backend interface 3248. The backend interface 3248 may provide interconnectivity with a universal control bus of the vehicle.

Referring again to FIG. 32, the plurality of sub-10 GHz antennas 3220a-3220d are each coupled to the mmW antenna system via connector 3230a-3230b, respectively. Connector 3230a-3230b may be conductive metal wires. Referring to FIG. 34, each sub-10 GHz antenna 3220a-3220d may be connected to the RFIC 3244 via a respective connector 3230a-d to a respective connector interface (not shown) on PCB 3250.

The universal communication and radar design floorplan incorporating all wireless/radar standards can extend to all locations of the vehicle and ensure coverage with no blind spots and also without increasing substantial cost.

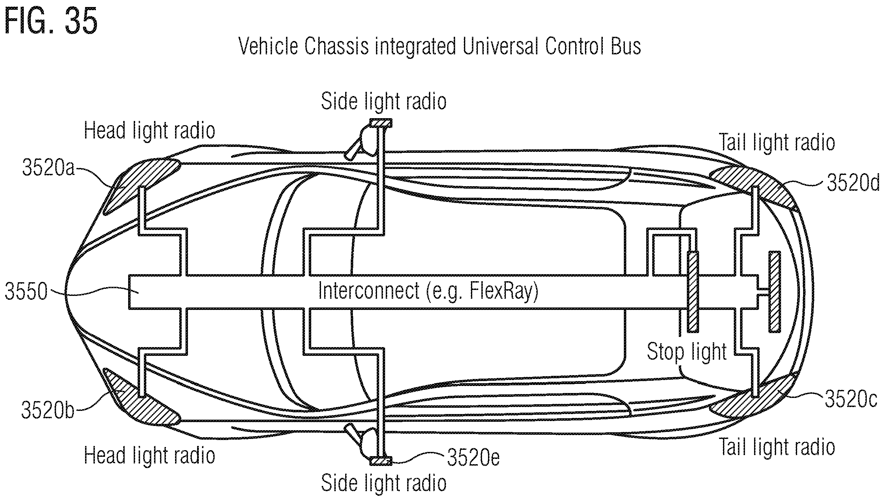

FIG. 35 is a schematic drawing illustrating an example of a universal antenna system control bus. Referring to FIG. 35, a universal control bus 3550 for interconnecting a plurality of antennas 3520a-f can coordinate the antennas all around the vehicle body. For example, the universal control bus 3550 may be integrated into the chassis of a vehicle and can be used to couple to the backend interface of each antenna thereby integrating all the backend interfaces to control the different antenna systems all around the vehicle body. For example, antennas 3520a-f may be disposed at a left head light, a right head light, a left side mirror, a right side mirror, a left tail light, and a right tail light, respectively. Each of the antennas 3520a-f may be integrated or embedded with a respective light assembly module. The antennas 3520a-f may be configured as directional or omnidirectional antennas. The antennas 3520a-f may be configured to operate with a mmW combo antenna system supporting both communication and radar integrated on the top of the vehicle roof.

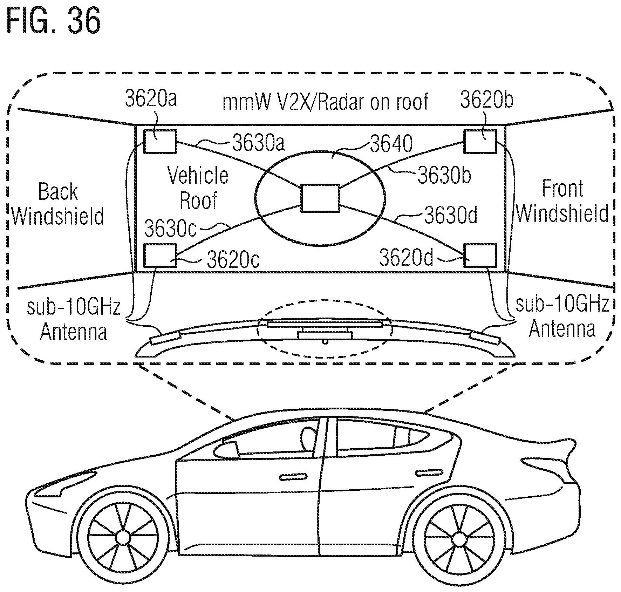

FIG. 36 is another schematic drawing illustrating an example of an integrated embedded antenna including a mmW antenna system a sub-10 GHz antenna system. Specifically, FIG. 36 illustrates the co-existence of a plurality of sub-10 GHz antennas and a mmW antenna system embedded in a roof of a vehicle. The embedded antenna system shown in FIG. 36 is similar to the system described with respect to FIG. 32. For example, a mmW antenna system 3640 is positioned at a central location of a roof of a vehicle. Four sub-10 GHz antennas 3630a-d are positioned around the mmW antenna system 3640. The integrated circuits and backend connections for controlling the respective antenna systems are commonly located. For example, the integrated circuits (e.g., RFIC and mmw IC) for controlling the two antenna systems may be disposed in the central location along with backend connections and heatsinks.

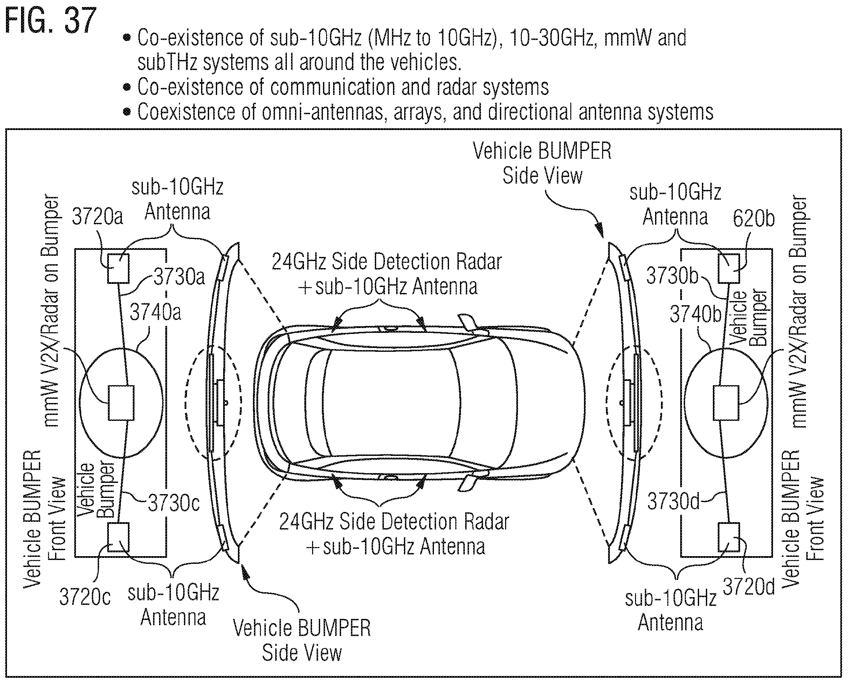

FIG. 37 is another schematic drawing illustrating an embedded antenna system including a mmW antenna system and a sub-10 GHz antenna system. Specifically, FIG. 37 illustrates the co-existence of a plurality of sub-10 GHz antennas and a mmW antenna system at the front and back bumper of vehicles. The embedded antenna system shown in FIG. 37 is similar to the system described with respect to FIG. 32. For example, a mmW antenna system 3740a-b is positioned at a central location of a front bumper and/or rear bumper respectively. A pair of sub-10 GHz antennas 3730a-d are positioned at the left and right edges of the front and/or rear bumpers, respectively. The integrated circuits and backend connections for controlling the respective antenna systems are commonly located. For example, the integrated circuits and backend connections may be disposed in a central location with the mmW antenna system.

Additionally, antennas embedded in the front and rear bumpers of the vehicle can be integrated and coordinated with antennas embedded in other portions of the vehicle via the universal control bus 3550.

Additionally, for example, a 24 GHz side-detection-radar antenna system can be combined with sub-10 GHz antennas for communication coverage on one side of a car. For example, a radar antenna and a sub-10 Ghz may be placed in a panel of the car door. For another example, a radar antenna may be placed in a panel of the car door and a sub-10 Ghz may be placed is a side view mirror of the same car door.

FIG. 37 shows the co-existence of mmW (28GHz, 39GHz, 60GHz. 73GHz) communication system, radar system (24GHz, 79GHz), and sub-10 GHz radio system.

It should be noted that one or more of the features of any of the examples above may be combined with any one of the other examples.

The foregoing description has been given by way of example only. The specification and drawings are therefore to be regarded in an illustrative sense rather than a restrictive sense.

The scope of the disclosure is thus indicated by the appended claims and all changes which come within the meaning of the claims are therefore intended to be embraced.

## Claims

**1.** A retro-directive antenna array system for wireless communications comprising:

an antenna array (602, 612, 622) comprising one or more antenna elements; and

a negative refractive-index engineered material, NIM, deposited over at least one of the one or more antenna elements, wherein the retro-directive antenna array system is configured such that signal received by the antenna array system passes through the NIM material prior to being received by the antenna array (602, 612, 622).

**2.** The retro-directive antenna array system of claim 1, wherein the NIM has a permittivity of about -1 and a permeability of about -1.

**3.** The retro-directive antenna array system of any one of claims 1 or 2, further comprising:
a retro-directive antenna array circuitry operatively coupled to the antenna array.

**4.** The retro-directive antenna array system of claim 3, wherein the retro-directive antenna array circuitry does not include phase conjugation circuitry configured to perform phase conjugation of signals received by the antenna array system.

**5.** The retro-directive antenna array system of any one of claims 3 or 4,
wherein the retro-directive array circuity does not include a frequency mixer to conjugate phases of signals received by the antenna array system with signals to be transmitted from the antenna array system.

**6.** The retro-directive antenna array system of any one of claims 3 to 5,
wherein the retro-directive array circuity does not include a harmonic or subharmonic mixer to conjugate phases of signals received by the antenna array system with signals to be transmitted from the antenna array system.

**7.** The retro-directive antenna array system of any one of claims 1 to 6,
wherein the NIM is configured to achieve a phase conjugation of the signal received by the antenna array system.

**8.** The retro-directive antenna array system of any one of claims 1 to 7,
wherein the NIM is configured to negatively refract signals and provide the negatively refracted signals to the antenna array (602, 612, 622).

**9.** The retro-directive antenna array system of any one of claims 1 to 8,
wherein the antenna array (602, 612, 622) comprises a first subset of antenna elements for reception and a second subset of antenna elements for transmission, wherein the NIM is deposited over the first subset of antenna elements.

**10.** The retro-directive antenna array system of claim 9, wherein the NIM is deposited only over the first subset of antenna elements and not over the second subset of antenna elements.

**11.** The retro-directive antenna array system of any one of claims 1 to 8, wherein the antenna array (602, 612, 622) comprises a dual-polarized antenna with a first polarity in a reception direction for signals received by the antenna array system and a second polarity in a transmission direction for signals transmitted from the antenna array system, wherein the first polarity and the second polarity are different.

**12.** The retro-directive antenna array system of claim 11, wherein the NIM is aligned with the antenna array (602, 612, 622); and wherein the retro-directive antenna array system is configured such that signals received by the antenna array system are negatively refracted by the NIM.

**13.** The retro-directive antenna array system of claim 12, wherein only phases of the signals received by the antenna array system are reversed and phases of the signals transmitted from the antenna array system are not reversed.

**14.** The retro-directive antenna array system of any one of claims 1 to 13, wherein the NIM has a tunable surface configured to be adjusted via application of a stimulus.

**15.** The retro-directive antenna array system of claim 14, wherein the stimulus is at least one of an electric stimulus or a magnetic stimulus.

**Patentansprüche**

**1.** Retrodirektives Antennenarraysystem zur drahtlosen Kommunikation, das Folgendes umfasst:

ein Antennenarray (602, 612, 622), das ein oder mehrere Antennenelemente umfasst; und
ein technisches Material mit negativem Brechungsindex, NIM, das über mindestens einem des einen oder der mehreren Antennenelemente abgeschieden ist, wobei das retrodirektive Antennenarraysystem so konfiguriert ist, dass ein durch das Antennenarraysystem empfangenes Signal durch das NIM-Material hindurchgeht, bevor es durch das Antennenarray (602, 612, 622) empfangen wird.

**2.** Retrodirektives Antennenarraysystem nach Anspruch 1, wobei das NIM eine Permittivität von etwa -1 und eine Permeabilität von etwa -1 aufweist.

**3.** Retrodirektives Antennenarraysystem nach einem der Ansprüche 1 oder 2, das ferner Folgendes umfasst: eine Schaltungsanordnung eines retrodirektiven Antennenarrays, die operativ mit dem Antennenarray gekoppelt ist.

**4.** Retrodirektives Antennenarraysystem nach Anspruch 3, wobei die Schaltungsanordnung eines retrodirektiven Antennenarrays keine Phasenkonjugationsschaltungsanordnung aufweist, die dazu konfiguriert ist, eine Phasenkonjugation von Signalen durchzuführen, die durch das Antennenarraysystem empfangen werden.

**5.** Retrodirektives Antennenarraysystem nach einem der Ansprüche 3 oder 4, wobei die Schaltungsanordnung eines retrodirektiven Arrays keinen Frequenzmischer aufweist, um Phasen von Signalen, die durch das Antennenarraysystem empfangen werden, mit Signalen zu konjugieren, die von dem Antennenarraysystem zu übertragen sind.

**6.** Retrodirektives Antennenarraysystem nach einem der Ansprüche 3 bis 5, wobei die Schaltungsanordnung eines retrodirektiven Arrays keinen harmonischen oder subharmonischen Mischer aufweist, um Phasen von Signalen, die durch das Antennenarraysystem empfangen werden, mit Signalen zu konjugieren, die von dem Antennenarraysystem zu übertragen sind.

**7.** Retrodirektives Antennenarraysystem nach einem der Ansprüche 1 bis 6, wobei das NIM dazu konfiguriert ist, eine Phasenkonjugation des durch das Antennenarraysystem empfangenen Signals zu erreichen.

**8.** Retrodirektives Antennenarraysystem nach einem der Ansprüche 1 bis 7, wobei der NIM dazu konfiguriert ist, Signale negativ zu brechen und die negativ gebrochenen Signale an das Antennenarray (602, 612, 622) zu liefern.

**9.** Retrodirektives Antennenarraysystem nach einem der Ansprüche 1 bis 8, wobei das Antennenarray (602, 612, 622) eine erste Teilmenge von Antennenelementen zum Empfang und eine zweite Teilmenge von Antennenelementen zur Übertragung umfasst, wobei das NIM über der ersten Teilmenge von Antennenelementen abgeschieden ist.

**10.** Retrodirektives Antennenarraysystem nach Anspruch 9,
wobei das NIM nur über der ersten Teilmenge von Antennenelementen und nicht über der zweiten Teilmenge von Antennenelementen abgeschieden ist.

**11.** Retrodirektives Antennenarraysystem nach einem der Ansprüche 1 bis 8,
wobei das Antennenarray (602, 612, 622) eine zweifach polarisierte Antenne mit einer ersten Polarität in einer Empfangsrichtung für durch das Antennenarraysystem empfangene Signale und einer zweiten Polarität in einer Übertragungsrichtung für von dem Antennenarraysystem übertragene Signale umfasst, wobei die erste Polarität und die zweite Polarität unterschiedlich sind.

**12.** Retrodirektives Antennenarraysystem nach Anspruch 11,
wobei das NIM mit dem Antennenarray (602, 612, 622) ausgerichtet ist; und wobei das retrodirektive Antennenarraysystem so konfiguriert ist, dass Signale, die durch das Antennenarraysystem empfangen werden, durch das NIM negativ gebrochen werden.

**13.** Retrodirektives Antennenarraysystem nach Anspruch 12,
wobei nur Phasen der durch das Antennenarraysystem empfangenen Signale umgekehrt werden und Phasen der von dem Antennenarraysystem übertragenen Signale nicht umgekehrt werden.

**14.** Retrodirektives Antennenarraysystem nach einem der Ansprüche 1 bis 13,
wobei das NIM eine abstimmbare Oberfläche aufweist, die dazu konfiguriert ist, durch Anwendung eines Stimulus angepasst zu werden.

**15.** Retrodirektives Antennenarraysystem nach Anspruch 14,
wobei der Stimulus ein elektrischer Stimulus und/oder ein magnetischer Stimulus ist.

## Revendications

**1.** Système de réseau d'antennes rétro-directif pour des communications sans fil comprenant :

un réseau d'antennes (602, 612, 622) comprenant un ou plusieurs éléments d'antenne ; et
un matériau modifié à indice de réfraction négatif, NIM, déposé sur au moins un du ou des éléments d'antenne, le système de réseau d'antennes rétro-directif étant configuré de telle sorte que le signal reçu par le système de réseau d'antennes passe à travers le matériau NIM avant d'être reçu par le réseau d'antennes (602, 612, 622).

**2.** Système de réseau d'antennes rétro-directif selon la revendication 1,
le NIM ayant une permittivité d'environ -1 et une perméabilité d'environ -1.

**3.** Système de réseau d'antennes rétro-directif selon l'une quelconque des revendications 1 ou 2, comprenant en outre :
un circuit de réseau d'antennes rétro-directif couplé fonctionnellement au réseau d'antennes.

**4.** Système de réseau d'antennes rétro-directif selon la revendication 3,
le circuit de réseau d'antennes rétro-directif ne comprenant pas de circuit de conjugaison de phase configuré pour réaliser une conjugaison de phase de signaux reçus par le système de réseau d'antennes.

**5.** Système de réseau d'antennes rétro-directif selon l'une quelconque des revendications 3 ou 4,
le circuit de réseau rétro-directif ne comprenant pas de mélangeur de fréquence pour conjuguer des phases de signaux reçus par le système de réseau d'antennes avec des signaux devant être transmis par le système de réseau d'antennes.

**6.** Système de réseau d'antennes rétro-directif selon l'une quelconque des revendications 3 à 5,
le circuit de réseau rétro-directif ne comprenant pas de mélangeur harmonique ou sous-harmonique pour conjuguer des phases de signaux reçus par le système de réseau d'antennes avec des signaux devant être transmis par le système de réseau d'antennes.

**7.** Système de réseau d'antennes rétro-directif selon l'une quelconque des revendications 1 à 6,
le NIM étant configuré pour obtenir une conjugaison de phase du signal reçu par le système de réseau d'antennes.

**8.** Système de réseau d'antennes rétro-directif selon l'une quelconque des revendications 1 à 7,
le NIM étant configuré pour réfracter négativement des signaux et fournir les signaux réfractés négativement au réseau d'antennes (602, 612, 622).

**9.** Système de réseau d'antennes rétro-directif selon l'une quelconque des revendications 1 à 8,
le réseau d'antennes (602, 612, 622) comprenant un premier sous-ensemble d'éléments d'antenne pour réception et un second sous-ensemble d'éléments d'antenne pour émission, le NIM étant déposé sur le premier sous-ensemble d'éléments d'antenne.

**10.** Système de réseau d'antennes rétro-directif selon la revendication 9,
le NIM étant déposé uniquement sur le premier sous-ensemble d'éléments d'antenne et non sur le second sous-ensemble d'éléments d'antenne.

**11.** Système de réseau d'antennes rétro-directif selon l'une quelconque des revendications 1 à 8,
le réseau d'antennes (602, 612, 622) comprenant une antenne à double polarisation avec une première polarité dans une direction de réception pour des signaux reçus par le système de réseau d'antennes et une seconde polarité dans une direction de transmission pour des signaux émis par le système de réseau d'antennes, la première polarité et la seconde polarité étant différentes.

**12.** Système de réseau d'antennes rétro-directif selon la revendication 11,
le NIM étant aligné avec le réseau d'antennes (602, 612, 622) ; et le système de réseau d'antennes rétro-directif étant configuré de telle sorte que les signaux reçus par le système de réseau d'antennes sont réfractés négativement par le NIM.

**13.** Système de réseau d'antennes rétro-directif selon la revendication 12,
seules les phases des signaux reçus par le système de réseau d'antennes étant inversées et les phases des signaux transmis par le système de réseau d'antennes n'étant pas inversées.

**14.** Système de réseau d'antennes rétro-directif selon l'une quelconque des revendications 1 à 13,
le NIM ayant une surface accordable configurée pour être ajustée par l'intermédiaire de l'application d'un stimulus.

**15.** Système de réseau d'antennes rétro-directif selon la revendication 14,
le stimulus étant au moins l'un d'un stimulus électrique ou d'un stimulus magnétique.

100
mmW
BS
V2P
V2I
V2V
D2D
V2D

FIG. 1

FIG. 2

200
202
Rx 5.79GHz
204
Tx 5.81GHz
Phase Conjugation
Circuitry
210
214
206
LO
(11.6/2.9GHz)
212
208

FIG. 3
300
Incident
signal
θ1
Free space
(n1=1)
302
304
Medium
(n2)
θ2
θ3
Negative
Refraction (n<0)
Positive (ordinary)
Refraction (n>0)
310
320

FIG. 4

400
410
Incoming signal
θ
d
Antenna array
Incoming signal
θ
-θ
NIM
d
Antenna array

FIG. 5
Patch antenna
500
30°
Incoming signal
Free space
Engineered Material
($\varepsilon_r = \mu_r = -1$)
510
Incoming signal
30°
Free space
Engineered Material
($\varepsilon_r = \mu_r = -1$)
-30°
Negatively refracted incoming signal

FIG. 6

600
Incoming signal
(Beacon)
Output signal
NIM
602
Rx
Tx
604
RDA
System

610
Incoming signal
(Beacon)
(H- / V-pol)
Output signal
(V- / H-pol)
NIM
612
Rx
Tx
RDA
System

620
Incoming signal
(Beacon)
Output signal
NIM with
tunable surface
622
624
Switch
Rx
Tx
626
Phase
Detector
RDA
System

FIG. 7

700

Incoming
(Beacon)
(H- / V-pol)
Outgoing
(V- / H-pol)
NIM
NIM
NIM
NIM
702
702
Outgoing
Incoming
704
704
Baseband

FIG. 8

800
802
Providing an antenna array comprising one or more antenna elements
804
Depositing a negative refractive index engineered material over at least one of the one or more antenna elements

FIG. 9
900
V2V
V2D
V2Sat
V2N
V2I
V2R
V2S
V2P
950
Internet
Road side
Unit
V2I
V2I
V2I
V2I
V2I

FIG. 10

Broadside Beam
1000
Switch Beam
antenna elements
Phased
Array
Endfire Beam
RFIC
Module
Heatsink

Azimuth Coverage
1050
Switched
Beam
in Azimuth
90°
180°
0°
270°

FIG. 11

Elevation Coverage
1100
1102
Phased Array
Steered beam
90°
140°
40°
165°
15°
180°
0°
195°
345°
Switched Array
Fixed Beam
In Elevation
270°

Coverage with Tilted Endfire Beam in Elevation
1110
1112
Phased Array
Steered beam
90°
140°
40°
165°
15°
180°
0°
TILTED BEAM
in Elevation
Endfire Switched Array
270°

FIG. 12
1200
1250
Multiband Switched-Beam Endfire Array
Multiband Switched-Beam Endfire Array
Multiband Phased Array
Multiband Switched-Beam Endfire Array
Multiband Switched-Beam Endfire Array
1
2
3
4
5
6
7
8
SPnT Switch
Interconnect
Switch Beam antenna elements

1300
Switched Beam
antenna elements
Interconnect
Switch
Metal
Traces
mmW ICs
Phased
Array
Heatsink and backend
circuits/connections
Micro Vias
Switch
Interconnect
Switched Beam
antenna elements
Multilayer
Substrate

FIG. 13

FIG. 14
1410
1400
1420
SP8T
Switch
mmW
In/Out
Switched
1x8 POC
Azimuth
90°
Coverage
[dB]
Phi [deg]
20.0
18.0
16.0
14.0
12.0
10.0
8.0
6.0
4.0
2.0
0.0
-2.0
-4.0
-6.0
-8.0
-10.0
-12.0
-14.0
-16.0
-18.0
-20.0
-180
-150
-120
-90
-60
-30
0
30
60
90
120
150
180
1
2
3
4
5
6
7
8

FIG. 15

1510
PCB area for supporting system (non-radiating)
Protective substrate
Radiation enhancing features
Radiating structure
Twin radiating aperture

SIW Feed divider
1520
Feed port
Layer 1
Enhancing slot
Layer 1
Layer 2
Twin radiating structures
Enhancing dielectric Insert
Layer 2
Overlap section

1530
Layer 1 conductor
core Substrate
Layer 2 conductor

FIG. 16

1600
Low vertical profile
Directing structure
Conducting face (to account for car body)
Top reflecting structure
Mechanical supports
Switched Beam antenna Element
Bottom reflecting structure

FIG. 17
1700
Performance augmenting antenna housing
1710
PeakGain vs Frequency
With Housing
Without Housing
dB (PeakGain)
20.0
19.5
19.0
18.5
18.0
17.5
17.0
16.5
16.0
15.5
15.0
24.0 24.5 25.0 25.5 26.0 26.5 27.0 27.5 28.0 28.5 29.0 29.5 30.0
Freq [GHz]
1720
Without Housing
With Housing
[dB]
0
-4
-8
-12
-16
-20
-24
-28
-32
-36
-40
-44
Performance augmenting housing does not impact bandwidth
24.0 24.5 25.0 25.5 26.0 26.5 27.0 27.5 28.0 28.5 29.0 29.5 30.0
Freq [GHz]

FIG. 18

1800
Performance enhancement and
weather protection housing
1
2
3
4
5
6
7
8
SP8T
Switch
From Radio
Low
vertical
profile
Mechanical
supports

1810

FIG. 19

1900
Azimuth
>18dB gain
8 7 6 5 4 3 2 1
90° Coverage
[dB]
20.0
18.0
16.0
14.0
12.0
10.0
8.0
6.0
4.0
2.0
0.0
-2.0
-4.0
-6.0
-8.0
-10.0
-12.0
-14.0
-16.0
-18.0
-20.0
-180 -150 -120 -90 -60 -30 0 30 60 90 120 150 180
Phi [deg]

1950
PeakGain vs Frequency
with housing
(2-3 dB better)
No Housing
dB (PeakGain)
20.0
19.5
19.0
18.5
18.0
17.5
17.0
16.5
16.0
15.5
15.0
24.0 24.5 25.0 25.5 26.0 26.5 27.0 27.5 28.0 28.5 29.0 29.5 30.0
Freq [GHz]

FIG. 20

2000
Switched-Beam Array Beam
Phased Array Beam
MxN Phased Array
mmW SPnT Switch
2100
Circular Switched Beam Array Element

FIG. 21

2100

2102 Providing a first antenna array comprising a phased array which is configured to be operatively coupled to one or more radio frequency integrated circuits

2104 Arranging a second antenna array comprising a plurality of switched beam antenna array elements around the first antenna array, wherein the plurality of switched beam antenna array elements are divided into one or more subsets of switched beam antenna array elements

2106 Connecting each of subsets of switched beam antenna array elements to a respective switch of one or more switches, wherein the one or more switches are configured to provide an interface between a respective subset of the one or more subsets of switched beam antenna array elements and the one or more radio frequency circuits

2211
2208
F
E
M
2206B
2206A
2215
RF CIR.
106
AMP.
CIR.
MIX.
CIR.
SYNTH.
CIR.
FILTER
CIR.
2206D
2206C
2204G
2204E
2204F
2210
MEMORY
BASEBAND
CIRCUITRY
CPU
AUDIO
DSP
OTHER
5G
BB
4G
BB
3G
BB
2204D
2204C
2204B
2204A

FIG. 22

Wideband/Dual-band
Antenna
2310a
RF Module
2305a
Diplexer
2320a
Band 1
2350
Band 2

FIG. 23A

Band-1
Antenna
2310b
RF Module
2305b
Band 1
Band-2
Antenna
2310b
Band 2

FIG. 23B

2310c
Wideband/Dual-band
Antenna
2305c
RF Module
Band 1
Diplexer
2320c
2350
Band 2
2330c

FIG. 23C

2410
2400
Band-1 Antenna
Band-2 Antenna
Band-3 Antenna
2450
Band-1 RF/TRx
Band-2 RF/TRx
Band-3 RF/TRx
BB Module
BB Module
BB Module
Backend Electronics
Light Source Assembly Enclosure
To High Reliability Interconnect Bus

FIG. 24

2500
2520a
2530a
2560a
2570a
2540b
2550a
2520c
2530c
2560c
2570c
2540c
2550d
2575
2510
2590
2580
2530b
2560b
2570b
2540b
2550b
2520b
2530d
2560d
2570d
2540d
2550d
2520d

FIG. 25

2600
d1
d1
d1
2605
2620
2650
2680
2660
2640
2670
2640
2665
2630
2615
2610

FIG. 26

2700
d2
2720
d1
2730a
d3
2730b
2710
Max 8.02
10
5
0
-5
-10
-15
-20
-25
Min -23.44
120
150
180
210
210
270
300
330
0
30
60

FIG. 27A

FIG. 27B

2750
2765a
d1
2780
2790
2770a
2770b
2767
2720a
d2
2720
2765b
⑨
⑧
⑦
⑥
⑤
④
③
②
①
180
210
150
120
90
60
30
0
330
300
270
Max 13.67
15
10
5
0
-5
-10
-15
-30
-25
-30
Min -26.59

FIG. 27C

FIG. 27D

FIG. 28
2810
2802
2808
2820
2802
2830
2802
2808
2804
2840
2804

2910

FIG. 29A

2900

FIG. 29B

2900a
2950
2970
2920
2930

FIG. 29C

FIG. 29D

2980
FIG. 29E
2930e
2960
2940
2965
2965 2940
FIG. 29F
FIG. 29G

2920
2930
2940
2985
2940
2970

FIG. 29H

FIG. 29I

3000
3015
3050
3030a
3020
3010
3040
3040
3030b

FIG. 30

3100
3105a
3120
3040

FIG. 31A

3105a
3110a
3110c
3110d
3110b

FIG. 31B

3000a
3000b
3000c

FIG. 31C

3110a
3110b
3110c
3130
3110d
3130

FIG. 31D

3000a
3115
3150
3000b
3115
3115
1050
3115
900c

FIG. 31E

3220d
3220b
3230b
3205
3230d
3240
3230c
3230a
3220a
3220c
3200

FIG. 32

3220b
3230b
3240
3230a
3220a

FIG. 33

3230b
Phased/Switched-Beam Antenna
PCB
3246
mmW IC
3248
Heatsink/Backend Interface
RFIC
3244
3242
3250
3230a
3240

FIG. 34

FIG. 35

Vehicle Chassis integrated Universal Control Bus
Head light radio
3520a
3550
Head light radio
3520b
Side light radio
Interconnect (e.g. FlexRay)
Side light radio
3520e
Stop light
Tail light radio
3520d
Tail light radio
3520c

FIG. 36

3620a
mmW V2X/Radar on roof
3620b
3630a
3640
Vehicle
Roof
3630b
Back
Windshield
Front
Windshield
3630c
3630d
3620c
3620d
sub-10GHz
Antenna
sub-10GHz
Antenna

FIG. 37
• Co-existence of sub-10GHz (MHz to 10GHz), 10-30GHz, mmW and subTHz systems all around the vehicles.
• Co-existence of communication and radar systems
• Coexistence of omni-antennas, arrays, and directional antenna systems
Vehicle BUMPER Side View
24GHz Side Detection Radar + sub-10GHz Antenna
24GHz Side Detection Radar + sub-10GHz Antenna
Vehicle BUMPER Side View
sub-10GHz Antenna
sub-10GHz Antenna
sub-10GHz Antenna
sub-10GHz Antenna
3720a
3730a
3740a
3730c
3720c
Vehicle Bumper
mmW V2X/Radar on Bumper
Vehicle BUMPER Front View
620b
3730b
3740b
3730d
3720d
Vehicle Bumper
mmW V2X/Radar on Bumper
Vehicle BUMPER Front View

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2012327516 A1
- US 10270508 B2


### Non-patent literature cited in the description


- Design of Dual Polarized Retrodirective Metasurfaces. **KALAAGI MOHAMMED et al.** 2018 IEEE Radio and Antenna Days of the Indian Ocean (RADIO). Radio Society, 15 October 2018, 1-2